# EUROPEAN PATENT APPLICATION

(11) **EP 4 410 399 A1**
(43) Date of publication of application: **07.08.2024**
(21) Application number: 22895788.2
(22) Date of filing: 22.07.2022
(51) Int. Cl.: B01D 35/30, B01D 35/157

(54) **COMPOSITE FILTER AND WATER PURIFIER HAVING SAME**

(30) Priority: 16.11.2021 KR 20210157857; 18.11.2021 KR 20210159772
(71) Applicant: Coway Co., Ltd., Gongju-si, Chungcheongnam-do 32508 (KR)
(72) Inventor: MOON, Tae Hun, Gongju-si, Chungcheongnam-do 32508 (KR); YUN, Sung Han, Gongju-si, Chungcheongnam-do 32508 (KR); RYU, Geun Sang, Gongju-si, Chungcheongnam-do 32508 (KR); HAN, Doo Won, Gongju-si, Chungcheongnam-do 32508 (KR); LEE, Jung Hun, Gongju-si, Chungcheongnam-do 32508 (KR)
(74) Representative: BCKIP Part mbB
(86) International application number: PCT/KR2022/010825
(87) International publication number: WO 2023/090578

(57) **Abstract**

A composite filter and a water purifier having the composite filter are provided. The composite filter according to an exemplary embodiment of the present invention may include: a cover cap in which a first inner space is formed; a lower filter structure including a lower filter; a connection tube in which a first connection tube space and a second connection tube space are formed; a housing body in which a second inner space is formed; an upper filter structure which divides the second inner space into a first housing body space and a second housing body space and includes an upper filter; and a housing head including a first water inlet port, a first water outlet port, a second water inlet port, and a second water outlet port.

## Description

### TECHNICAL FIELD

The present invention relates to a composite filter and a water purifier having the same, and more particularly, to a composite filter having a plurality of filters disposed therein and an independent flow path for each filter and a water purifier having the same.

### BACKGROUND

In general, a water purifier is an apparatus that filters obtained raw water into drinkable purified water and provides it to the user. These water purifiers are used in combination with several filters for raw water filtration, and when each filter is used in combination, the layout inside the water purifier becomes complicated, and the volume occupied by the filter inside increases, thereby increasing the volume of the entire water purifier. Therefore, to solve this problem, a composite filter in which each filter is integrated is sometimes used.

JOYOUNG CO. LTD's Chinese Laid-Open Patent Publication No. 108786258 discloses a conventional composite filter. It is disclosed that this composite filter has a structure in which a first filter and a second filter are stacked vertically in an internal space formed by sealing a case and a mounting head. In addition, a structure is disclosed in which an isolation cover, a first top cover, and a second top cover are provided to isolate flow paths passing through the first filter and the second filter from each other. In this case, there is a problem in that the invention disclosed in Chinese Laid-Open Patent Publication No. 108786258 does not have a single structure for fixing the first filter and the second filter inside the case, making it complicated to assemble the first filter and the second filter inside the case. In addition, as both the flow path through the first filter and the flow path through the second filter, which are isolated from each other, are formed in two layers on the outside of the first filter and connected to the outside, there is a problem in that the width of each flow path in the radial direction is narrowed, making the flow of the fluid not smooth, and there is a limit to minimizing the size of the composite filter in order to secure a smooth flow of the fluid. Furthermore, both the first filter and the second filter are required to form a flow path inside the case, and thus there is a limitation in that the first filter or the second filter cannot be selectively installed and used inside the case.

FOSHAN SHUNDE MIDE WATER DISPENSER MFG CO. LTD and MIDEA GROUP CO. LTD's Chinese Patent Registration No. 206837602 discloses a conventional composite filter. It is disclosed that this composite filter has a structure in which a first filter element and a second filter element are stacked vertically in a space formed inside a housing sealed with a filter adapter. In this case, the invention disclosed in Chinese Patent Registration No. 206837602 had a problem in that it was complicated to assemble the first filter element and the second filter element to the housing as the first filter element and the second filter element were directly coupled to the interior of the housing. In addition, as both the flow path through the first filter element and the flow path through the second filter element are connected to the outside through the first filter element, there is a problem in that the flow of fluid is not smooth due to the decrease in the width of each flow path in the radiation direction, and it is difficult to minimize the size of the composite filter.

ZHEJIANG LONSID HEALTHY DRINKING WATER EQUIPMENT CO. LTD's Chinese Laid-Open Patent Publication No. 211871582 discloses a conventional composite filter. It is disclosed that this composite filter has a structure in which a pre-filter and a post-carbon filter are stacked vertically in a space formed inside a filter bottle cap sealed with a filter bottle. In this case, the invention disclosed in Chinese Laid-Open Patent Publication No. 211871582 also had a problem in that it was complicated to assemble the pre-filter and post-carbon filter inside the filter bottle as the pre-filter and post-carbon filter were directly combined inside the filter bottle. In addition, as both the flow path through the pre-filter and the flow path through the post-carbon filter are connected to the outside through the outside of the post-carbon filter, there is a problem that the width of each flow path in the radial direction decreases.

### SUMMARY OF THE INVENTION

### Technical Problem

In order to solve the above problems, the present invention is directed to providing a composite filter that simultaneously provides a first flow path through an upper filter and a second flow path through a lower filter, which are independent, by stacking the upper filter and the lower filter in the up-down direction inside a housing body.

The present invention is directed to providing a composite filter capable of easily assembling a lower filter structure and an upper filter structure inside the housing body by having a cover cap.

The present invention is directed to providing a composite filter capable of minimizing the size of the composite filter and providing a second flow path of the lower filter structure, which is a flow path independent of the housing body and the upper filter structure by having a connection tube with a first connection tube space and a second connection tube space formed therein.

The present invention is directed to providing a composite filter in which the first flow path and the second flow path are connected to the outside through the central portions of the upper filter structure and the lower filter structure to widen the width of the flow paths so that a fluid may move smoothly.

The present invention is directed to providing a composite filter capable of variously designing a method in which the first flow path and the second flow path are connected by including a housing head with a plurality of ports.

The present invention is directed to providing a composite filter that provides a space for a fluid to move smoothly between a cover cap and a connection tube body by having a protrusion at the lower side of the connection tube body.

The present invention is directed to providing a composite filter capable of minimizing the size of the composite filter and additionally filtering raw water by arranging an additional filter in a second cover cap space.

The present invention is directed to providing a composite filter capable of additionally using a filter that is difficult to install in the composite filter by connecting an external filter between the first flow path and the second flow path.

The present invention is directed to providing a composite filter capable of purifying raw water even when only the first filter structure or the second filter structure is coupled by having an independent first connection tube space to fourth connection tube space inside the connection tube.

The present invention is directed to providing a composite filter capable of easily assembling the first filter structure and the second filter structure inside a housing body by penetrating and coupling the first filter structure and the second filter structure to a connection tube.

The present invention is directed to providing a composite filter that can simplify the manufacturing process of the connection tube by forming a connection tube space formed inside the connection tube through a guide tube.

The present invention is directed to providing a composite filter capable of additionally arranging a composite filter and connecting it in series or parallel by forming a plurality of inlet and outlet ports provided in a housing head in plurality, respectively.

The problems of the present invention are not limited to those mentioned above, and other problems not mentioned will be clearly understood by those of ordinary skill in the art from the following description.

### Technical Solution

In order to solve such problems, a composite filter according to one aspect of the present invention may include: a cover cap in which a first inner space is formed therein; a lower filter structure disposed in the first internal space and including a lower filter; a connection tube extending in length, having a first connection tube space and a second connection tube space formed therein extending in the longitudinal direction, having a lower end coupling to the lower filter structure, thereby, together with the lower filter structure, partitioning the first inner space into a first cover cap space and a second cover cap space; a housing body in which a second inner space with an upper side opening to the outside is formed and the cover cap, the lower filter structure, and the connection tube are disposed in the second inner space; an upper filter structure comprising an upper filter, the upper filter structure being disposed above the lower filter structure, coupled to the connection tube, and having a lower end coupled to the cover cap, thereby partitioning a space above the cover cap among the second inner space into a first housing body space and a second housing body space; a housing head coupled to the upper side of the housing body, having a first water inlet space, a first water outlet space, a second water inlet space, and a second water outlet space formed therein, and having a first water inlet port connected to the first water inlet space, a first water outlet port connected to the first water outlet space, a second water inlet port connected to the second water inlet space, and a second water outlet port connected to the second water outlet space; a first flow path formed such that through which first raw water introduced into the first water inlet port passes through the first water inlet space, the first housing body space, the upper filter, the second housing body space, and the first water outlet space, and then is discharged through the first water outlet port into first purified water; and a second flow path formed such that through which second raw water introduced into the second water inlet port passes through the second water inlet space, the first connection tube space, the first cover cap space, the lower filter, the second cover cap space, the second connection tube space, and the second water outlet space, and then is discharged through the second water outlet port into second purified water.

In this case, the housing head may include: a housing head body covering the upper side of the housing body; a first partition wall extending downward from the housing head body to partition the first water inlet space and the first water outlet space; a second partition wall extending downward from the housing head body to partition the first water outlet space and the second water outlet space; and a third partition wall extending downward from the housing head body to partition the second water outlet space and the second water inlet space, and the first partition wall, the second partition wall, and the third partition wall may be sequentially formed in a cylindrical shape with a small diameter.

In this case, the connection tube may include: an outer wall formed in a tubular shape and having at least one through hole formed at a lower end to connect the second connection tube space and the second cover cap space; and a guide wall disposed inside the outer wall to partition the first connection tube space and the second connection tube space, and the upper end of the guide wall may be coupled to the third partition wall so that the second water inlet space and the first connection tube space are connected, and the upper end of the outer wall may be coupled to the second partition wall so that the second water outlet space and the second connection tube space are connected.

In this case, the connection tube may further include: a connection tube body formed between the lower end of the outer wall and the lower end of the guide wall to close the lower side of the second connection tube space so that the second connection tube space is partitioned from the first cover cap space and open the lower side of the first connection tube space so that the first connection tube space is connected to the first cover cap space, and at least one protrusion protruding downward from the connection tube body so that the lower end of the lower filter structure is spaced apart from the cover cap.

In this case, the upper filter may be formed in a hollow shape so that the first housing body space is formed on the outside and the second housing body space is formed on the inside, the upper filter structure may include: a first upper cap supporting the upper side of the upper filter; and a first lower cap supporting the lower side of the upper filter, and the connection tube may be disposed through the upper filter, the first upper cap, and the first lower cap.

In this case, the first upper cap may further include a cylindrical guide member that extends upward to partition the first housing body space and the second housing body space and is coupled to the first partition wall, and the connection tube may be disposed through the inside of the guide member.

In this case, the lower filter may be formed in a hollow shape so that the first cover cap space is formed on the outside and the second cover cap space is formed on the inside, the lower filter structure may include: a second upper cap supporting the upper side of the lower filter; and a second lower cap supporting the lower side of the lower filter, and the connection tube may be disposed through the lower filter, the second upper cap, and the second lower cap so that the lower end of the connection tube is disposed in the second cover cap space.

In this case, the composite filter may further include a hollow additional filter disposed in the second cover cap space.

In this case, the composite filter may further include an external filter with one side connected to the first water outlet port and the other side connected to the second water inlet port, and the first water outlet port may be connected to the second water inlet port through the external filter, and the second raw water may be the first purified water.

In order to solve such problems, a composite filter according to another aspect of the present invention may include: a housing body in which a first inner space is formed; a first filter structure disposed in the first inner space, having a first filter, and partitioning a first housing body space defined by the outer circumferential surface of the first filter and the inner circumferential surface of the housing body; a connection tube extending in length to penetrate the first filter, having a first connection tube space and a second connection tube space formed therein extending in the longitudinal direction, and partitioning a second housing body space defined by the outer circumferential surface thereof and the inner circumferential surface of the first filter; a housing head disposed on the upper side of the housing body, having a first water inlet space and a first water outlet space formed therein, and having a first water inlet port connected to the first water inlet space and a first water outlet port connected to the first water outlet space; and a first flow path formed such that through which first raw water introduced into the first water inlet port passes through the first water inlet space, the first connection tube space, the first housing body space, the first filter, the second housing body space, the second connection tube space, and the first water outlet space, and then is discharged through the first water outlet port into first purified water.

In this case, the housing head may include: a housing head body coupled to the upper end of the connection tube and having a second inner space therein; a first partition wall partitioning the second inner space into a first water inlet space connected in fluid communication with the first connection tube space and a first water outlet space connected in fluid communication with the second connection tube space; a hollow first connection member connecting the first connection tube space and the first water inlet space; and a hollow second connection member connecting the second connection tube space and the first water outlet space.

In this case, the connection tube may include: a tubular outer wall; a guide wall partitioning the inside of the outer wall into the first connection tube space and the second connection tube space; at least one first through hole formed in a first portion of the outer wall so that the first connection tube space and the first housing body space are connected; and at least one second through hole formed in a second portion of the outer wall so that the second connection tube space and the second housing body space are connected.

In this case, the connection tube may include: a tubular first guide tube with a first connection tube space formed therein; at least one first through hole formed in a first portion of the first guide tube so that the first connection tube space and the first housing body space are connected; a second guide tube with a second connection tube space formed therein and formed in a tubular shape, but disposed parallel to the first guide tube; and at least one second through hole formed in a second portion of the second guide tube so that the second connection tube space and the second housing body space are connected.

In this case, the first filter may be formed in a hollow shape so that the first housing body space is formed on the outside and the second housing body space is formed on the inside, the first filter structure may include: a first upper cap supporting the upper side of the first filter; and a first lower cap supporting the lower side of the first filter, and the connection tube may be disposed through the first filter, the first upper cap, and the first lower cap.

In this case, the composite filter may further include a second filter structure disposed below the first filter structure in the first inner space, having a second filter, and partitioning a third housing body space defined by the outer circumferential surface of the second filter and the inner circumferential surface of the housing body, and the connection tube may further have a third connection tube space and a fourth connection tube space formed therein extending in the longitudinal direction, and partitioning a fourth housing body space defined by the outer circumferential surface thereof and the inner circumferential surface of the second filter; and the housing head may further have a second water inlet space in fluid communication with the third connection tube space and a second water outlet space in fluid communication with the fourth connection tube space formed in the second inner space, and further include a second water inlet port connected to the second water inlet space and a second water outlet port connected to the second water outlet space, and the composite filter may include: a second flow path formed such that through which second raw water introduced into the second water inlet port passes through the second water inlet space, the third connection tube space, the third housing body space, the second filter, the fourth housing body space, the fourth connection tube space, and the second water outlet space, and then is discharged through the second water outlet port into second purified water.

In this case, the housing head may further include: a second partition wall partitioning the first water inlet space and the first water outlet space from the second water inlet space; a third partition wall partitioning the first water outlet space and the second water inlet space from the second water outlet space; a hollow third connection member connecting the third connection tube space and the second water inlet space; and a hollow fourth connection member connecting the fourth connection tube space and the second water outlet space.

In this case, the connection tube may include: a tubular outer wall; a guide wall partitioning the inside of the outer wall into the first connection tube space, the second connection tube space, the third connection tube space, and the fourth connection tube space; at least one first through hole formed in a first portion of the outer wall so that the first connection tube space and the first housing body space are connected; at least one second through hole formed in a second portion of the outer wall so that the second connection tube space and the second housing body space are connected; at least one third through hole formed in a third portion of the outer wall so that the third connection tube space and the third housing body space are connected; and at least one fourth through hole formed in a fourth portion of the outer wall so that the fourth connection tube space and the fourth housing body space are connected.

In this case, the first filter may be formed in a hollow shape so that the first housing body space is formed on the outside and the second housing body space is formed on the inside, the first filter structure may include: a first upper cap supporting the upper side of the first filter; and a first lower cap supporting the lower side of the first filter, the connection tube may be disposed through the first filter, the first upper cap, and the first lower cap, the second filter may be formed in a hollow shape so that the third housing body space is formed on the outside and the fourth housing body space is formed on the inside, the second filter structure may include: a second upper cap supporting the upper side of the second filter; and a second lower cap supporting the lower side of the second filter, and the connection tube may be disposed through the second filter, the second upper cap, and the second lower cap.

In this case, the first lower cap may have a coupling groove formed on the lower surface thereof and recessed upward along the outer circumferential surface of the connection tube, the second upper cap may have a coupling protrusion formed on the upper surface thereof to protrude upward along the outer circumferential surface of the connection tube and to be inserted into and hermetically coupled to the coupling groove, a connection space may be formed inside the second upper cap and be connected to the first through hole to connect the first housing body space and the first connection tube space, and the first flow path may further pass through the connection space between the first housing body space and the first connection tube space.

In this case, a water purifier having a composite filter according to one aspect or another aspect described above may include a composite filter one aspect or another aspect described above; a valve unit regulating the flow of the first flow path and the second flow path; and a control unit for controlling the operation of the valve unit.

### Advantageous Effects

The composite filter according to the first embodiment of the present invention can simultaneously provide a first flow path through an upper filter and a second flow path through a lower filter, which are independent, by stacking the upper filter and the lower filter in the up-down direction inside a housing body.

The composite filter according to the first embodiment of the present invention can easily assemble a lower filter structure and an upper filter structure inside the housing body by having a cover cap.

The composite filter according to the first embodiment of the present invention can minimize the size of the composite filter and provide a second flow path of the lower filter structure, which is a flow path independent of the housing body and the upper filter structure by having a connection tube with a first connection tube space and a second connection tube space formed therein.

In the composite filter according to the first embodiment of the present invention, the first flow path and the second flow path can be connected to the outside through the central portions of the upper filter structure and the lower filter structure to widen the width of the flow paths so that a fluid can move smoothly.

The composite filter according to the first embodiment of the present invention can variously design a method in which the first flow path and the second flow path are connected by including a housing head with a plurality of ports.

The composite filter according to the first embodiment of the present invention provides a space for a fluid to move smoothly between a cover cap and a connection tube body by having a protrusion at the lower side of the connection tube body.

The composite filter according to the first embodiment of the present invention can minimize the size of the composite filter and additionally filter raw water by arranging an additional filter in a second cover cap space.

The composite filter according to the first embodiment of the present invention can additionally use a filter that is difficult to install in the composite filter by connecting an external filter between the first flow path and the second flow path.

The composite filter according to the second embodiment of the present invention can purify raw water even when only the first filter structure or the second filter structure is coupled by having an independent first connection tube space to fourth connection tube space inside the connection tube.

The composite filter according to the second embodiment of the present invention can easily assemble the first filter structure and the second filter structure inside a housing body by penetrating and coupling the first filter structure and the second filter structure to a connection tube.

The composite filter according to the second embodiment of the present invention can simplify the manufacturing process of the connection tube by forming a connection tube space formed inside the connection tube through a guide tube.

The composite filter according to the second embodiment of the present invention can additionally arrange a composite filter and connect it in series or parallel by forming a plurality of inlet and outlet ports provided in a housing head in plurality, respectively.

Advantageous effects of the present invention are not limited to the above-described effects, and should be understood to include all effects that can be inferred from the configuration of the invention described in the description or claims of the present invention.

### BRIEF DESCRIPTION OF THE DRAWINGS

FIG. 1 is a cross-sectional view illustrating a composite filter according to the first embodiment of the present invention.
FIG. 2 is an exploded cross-sectional view illustrating a housing body, an upper filter structure, a lower filter structure, and a connection tube of a composite filter according to the first embodiment of the present invention.
FIG. 3 is a plan view illustrating a housing head of a composite filter according to the first embodiment of the present invention.
FIG. 4 is a view illustrating a first flow path and a second flow path of a composite filter according to the first embodiment of the present invention.
FIG. 5 is an enlarged cross-sectional view of part A of FIG. 4.
FIG. 6 is an enlarged cross-sectional view of part B of FIG. 4.
FIG. 7 is a configuration diagram illustrating a water purifier having a composite filter according to the first embodiment of the present invention.
FIG. 8 is a configuration diagram illustrating the entire water piping diagram of a water purifier having a composite filter according to the first embodiment of the present invention.
FIG. 9 is a cross-sectional view illustrating a first connection tube space and a second connection tube space of a connection tube of a composite filter according to the second embodiment of the present invention.
FIG. 10 is a cross-sectional view illustrating a third connection tube space and a fourth connection tube space of a connection tube of a composite filter according to the second embodiment of the present invention.
FIG. 11 is an exploded cross-sectional view illustrating a housing body, a first filter structure, a second filter structure, and a connection tube of a composite filter according to the second embodiment of the present invention.
FIG. 12 is an enlarged cross-sectional view illustrating part A-A of a connection tube according to the second embodiment of the present invention of FIG. 11.
FIG. 13 is an enlarged cross-sectional view illustrating part A-A of a connection tube according to a modified example of the second embodiment of the present invention of FIG. 11.
FIG. 14 is a perspective view illustrating a housing head of a composite filter according to the second embodiment of the present invention.
FIG. 15 is a cross-sectional view illustrating a housing head of a composite filter according to the second embodiment of the present invention.
FIG. 16 is a cross-sectional view illustrating a first flow path of a composite filter according to the second embodiment of the present invention.
FIG. 17 is a cross-sectional view of part B-B of FIG. 16.
FIG. 18 is a cross-sectional view illustrating a second flow path of a composite filter according to the second embodiment of the present invention.
FIG. 19 is a cross-sectional view of part C-C of FIG. 18.
FIG. 20 is a configuration diagram illustrating a water purifier having a composite filter according to the second embodiment of the present invention.
FIG. 21 is a configuration diagram illustrating the entire water piping diagram of a water purifier having a composite filter according to the second embodiment of the present invention.

### DETAILED DESCRIPTION OF THE EMBODIMENTS

Hereinafter, exemplary embodiments of the present invention will be described in detail so that those of ordinary skill in the art can readily implement the present invention with reference to the accompanying drawings. The present invention may be embodied in many different forms and is not limited to the embodiments set forth herein. In the drawings, parts unrelated to the description are omitted for clarity of description of the present invention, and same or similar reference numerals denote same elements.

Terms and words used in the present specification and claims should not be construed as limited to their usual or dictionary definition. They should be interpreted as meaning and concepts consistent with the technical idea of the present invention, based on the principle that inventors may appropriately define the terms and concepts to describe their invention in the best way.

Accordingly, the embodiments described in the present specification and the configurations shown in the drawings correspond to preferred embodiments of the present invention, and do not represent all the technical idea of the present invention, so the configurations may have various examples of equivalent and modification that can replace them at the time of filing the present invention.

It should be understood that the terms "comprise" or "have" or the like when used in this specification, are intended to describe the presence of stated features, integers, steps, operations, elements, components and/or a combination thereof but not preclude the possibility of the presence or addition of one or more other features, integers, steps, operations, elements, components, or a combination thereof.

The presence of an element in/on "upper or above or top" or "lower or below or bottom" of another element includes not only being disposed in/on "upper or above or top" or "lower or below or bottom" directly in contact with other elements, but also cases in which another element being disposed in the middle, unless otherwise specified. In addition, unless otherwise specified, that an element is "connected" to another element includes not only direct connection to each other but also indirect connection to each other.

Hereinafter, a composite filter according to the first embodiment of the present invention will be described with reference to the accompanying drawings.

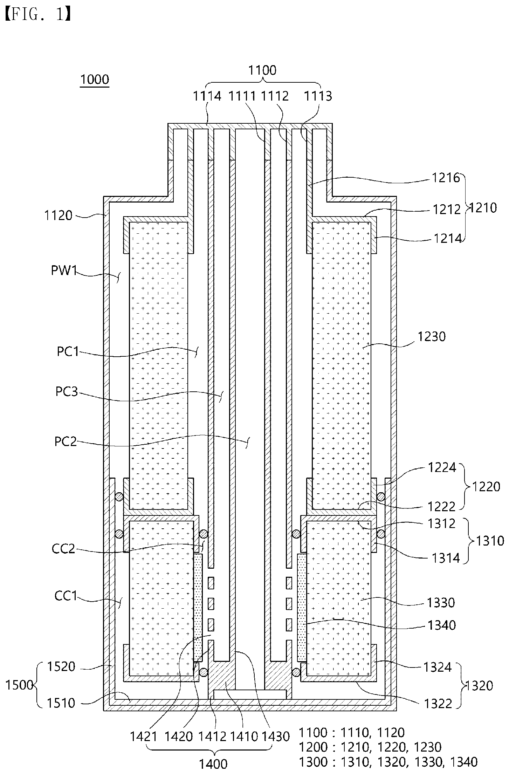

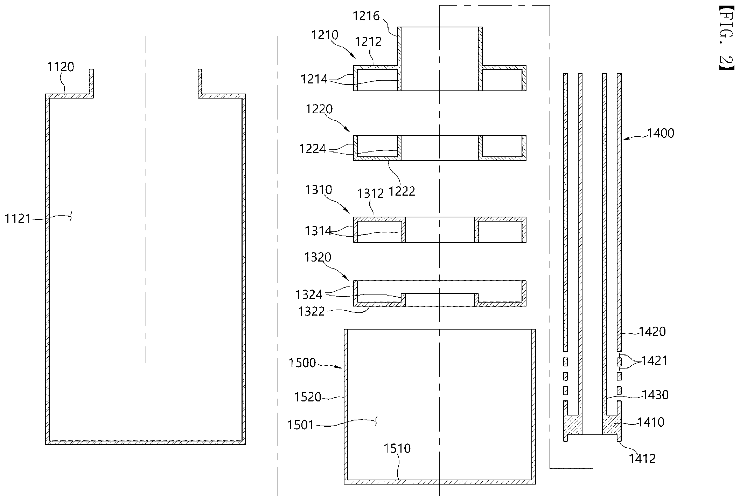

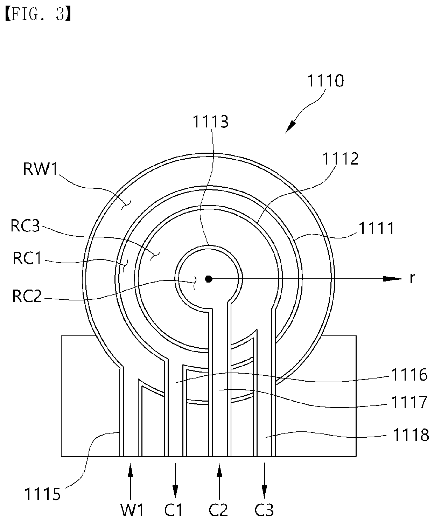

FIG. 1 is a cross-sectional view illustrating a composite filter according to the first embodiment of the present invention. FIG. 2 is an exploded cross-sectional view illustrating a housing body, an upper filter structure, a lower filter structure, and a connection tube of a composite filter according to the first embodiment of the present invention. FIG. 3 is a plan view illustrating a housing head of a composite filter according to the first embodiment of the present invention.

As shown in FIGS. 1 to 2, the composite filter 1000 according to the first embodiment of the present invention includes a cover cap 1500, a lower filter structure 1300, a connection tube 1400, a housing body 1120, an upper filter structure 1200, and a housing head 1110, thereby forming a first flow path and a second flow path therein, independently.

As shown in FIGS. 1 and 2, the cover cap 1500 is formed in a cylindrical shape having a first inner space 1501 formed therein. As long as the cover cap 1500 can be disposed inside the housing body 1120 by forming the same cross-section perpendicular to an axis extending in the up-down direction as the housing body 1120 to be described later, the shape of the cover cap 1500 is not limited.

In this case, the cover cap 1500 is formed such that the upper side thereof is open and the lower side thereof is closed, as shown in FIGS. 1 and 2. Accordingly, the lower filter structure 1300 is inserted and placed on the open upper side of the cover cap 1500.

The lower filter structure 1300 is disposed inside the cover cap 1500 to be coupled to the cover cap 1500, and partitions the first inner space 1501 of the cover cap 1500 into a first cover cap space CC1 and a second cover cap space CC2.

To this end, as shown in FIGS. 1 and 2, the lower filter structure 1300 of the composite filter 1000 according to the first embodiment of the present invention includes a lower filter 1330, a second upper cap 1310, and a second lower cap 1320.

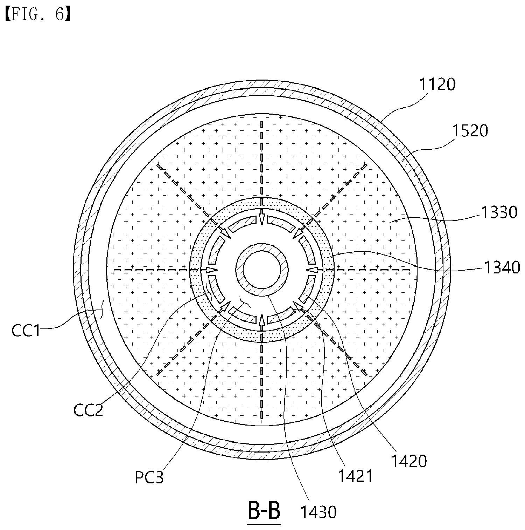

As shown in FIGS. 1 and 6, the lower filter 1330 partitions the first cover cap space CC1 and the second cover cap space CC2, and is formed in a hollow shape in which the first cover cap space CC1 is formed outside and the second cover cap space CC2 is formed inside. In this case, the lower filter 1330 may be formed in a cylindrical shape as shown in FIG. 6, but the shape thereof is not limited if the lower filter 1330 is formed in a hollow shape. The lower filter 1330 serves to remove foreign substances contained in raw water while the raw water located in the first cover cap space CC1 passes through the lower filter 1330 and moves to the second cover cap space CC2, and there is no limitation on the type of filter used as the lower filter 1330.

In this case, as shown in FIGS. 1 and 2, the second upper cap 1310 is coupled to the upper side of the lower filter 1330, and the second lower cap 1320 is coupled to the lower side of the lower filter 1330.

The second upper cap 1310 supports the upper side of the lower filter, and is hermetically coupled to the upper inner circumferential surface of the cover cap 1500 while supporting the lower filter 1330 so that the raw water of the first cover cap space CC1 may all move to the second cover cap space CC2. To this end, a sealing member may be disposed on the outer circumferential surface of the second upper cap 1310.

As shown in FIGS. 1 and 2, the second upper cap 1310 includes a second upper cap body 1312 and a second lower support member 1314 to support the lower filter 1330. The second upper cap body 1312 is formed in a centrally penetrated shape to cover the upper surface of the lower filter 1330 to correspond to the shape of the upper surface of the lower filter 1330, and the second lower support member 1314 is formed to protrude downward from the outer circumferential surface and the inner circumferential surface of the second upper cap body 1312. Accordingly, the upper end of the lower filter 1330 is inserted into and coupled to the second lower support member 1314.

The second lower cap 1320 also includes a second lower cap body 1322 and a second upper support member 1324 to support the lower filter 1330. The second lower cap body 1322 is formed in a centrally penetrated shape to cover the lower surface of the lower filter 1330 to correspond to the shape of the lower surface of the lower filter 1330, and the second upper support member 1324 is formed to protrude upward from the outer circumferential surface and the inner circumferential surface of the second lower cap body 1322. Accordingly, the lower end of the lower filter 1330 is inserted into and coupled to the second upper support member 1324.

As shown in FIG. 1, a hollow additional filter 1340 formed to surround the connection tube 1400 may be further disposed in the second cover cap space CC2. The additional filter 1340 allows the purified water filtered through the lower filter 1330 to be additionally filtered through the additional filter 1340. There is no limitation on the type of filter that can be used as the additional filter 1340, and various known filters can be used.

In a state in which the second upper cap 1310, the lower filter 1330, and the second lower cap 1320 are coupled, the lower end of the connection tube 1400 is coupled through the second upper cap 1310, the lower filter 1330, and the second lower cap 1320. Accordingly, the lower end of the connection tube 1400 is disposed in the second cover cap space.

The connection tube 1400 has a cylindrical shape formed by extending a length in the up-down direction, and has a first connection tube space PC2 and a second connection tube space PC3 formed therein in the extension direction. The first connection tube space PC2 and the second connection tube space PC3 are formed to be independent of each other.

The lower end of the connection tube 1400 is disposed to penetrate the second upper cap 1310 and the second lower cap 1320, and is hermetically coupled to the second upper cap 1310 and the second lower cap 1320. That is, as shown in FIG. 1, a sealing member may be disposed between the inner surfaces of the second upper cap 1310 and the second lower cap 1320 and the outer circumferential surface of the connection tube 1400.

In this case, the connection tube 1400 is combined with the second upper cap 1310 and the second lower cap 1320 to partition the first cover cap space CC1 and the second cover cap space CC2 into independent spaces, respectively, and to this end, as shown in FIGS. 1 and 2, the connection tube 1400 of the composite filter 1000 according to the first embodiment of the present invention includes an outer wall 1420, a guide wall 1430, a connection tube body 1410, and a protrusion 1412.

The outer wall 1420 is formed in a tubular shape extending in the up-down direction and is disposed at the outermost part of the connection tube 1400. The shape of the cross-section perpendicular to the extension direction of the outer wall 1420 is not limited as long as it can be hermetically coupled to the second upper cap 1310 and the second lower cap 1320. The outer wall 1420 is hermetically coupled to the second upper cap 1310 and the second lower cap 1320, thereby partitioning the second cover cap space CC2 defined by the outer circumferential surface of the outer wall 1420 and the inner circumferential surface of the second upper cap 1310, the lower filter 1330, and the second lower cap 1320, and other inner spaces of the cover cap 1500, that is, the first cover cap space CC1 as a space excluding the inner space of the connection tube 1400.

A space is formed in the outer wall 1420 in the up-down direction, and the guide wall 1430 is disposed in the space. The guide wall 1430 is formed in a tubular shape extending in the up-down direction like the outer wall 1420. Accordingly, a second connection tube space PC3 defined by the inner circumferential surface of the outer wall 1420 and the outer circumferential surface of the guide wall 1430 is formed, and a first connection tube space PC2 is formed inside the guide wall 1430.

The outer wall 1420 and the guide wall 1430 may be formed in a tubular shape in which a cross-section perpendicular to the longitudinal direction is formed in a cylindrical shape, and the centers of the outer wall 1420 and the guide wall 1430 may be arranged to coincide so that the shapes of the first connection tube space PC2 and the second connection tube space PC3 may be symmetrically formed.

As shown in FIGS. 1 and 2, the second connection tube space PC3 and the second cover cap space CC2 are connected to each other to be capable of fluid communication. To this end, a through hole 1421 connecting the second connection tube space PC3 and the second cover cap space CC2 is formed in the outer wall 1420. There is no limit to the shape or number of the through holes 1421.

As shown in FIG. 1, a connection tube body 1410 is formed at the lower end of the connection tube 1400. More specifically, the connection tube body 1410 is formed between the lower end of the outer wall 1420 and the lower end of the guide wall 1430 to connect the first connection tube space PC2 and the first cover cap space CC1, whereas the lower side of the second connection tube space PC3 is closed so that the second connection tube space PC3 and the first cover cap space CC1 are not connected.

In this case, at least one protrusion 1412 protruding downward is formed on the lower side of the connection tube 1400, more particularly, on the lower surface of the connection tube body 1410. The protrusion 1412 separates the lower surface of the connection tube body 1410 from the inner lower surface of the cover cap 1500. Accordingly, the first connection tube space PC2 and the first cover cap space CC1 are connected through a space between the connection tube body 1410 and the inner lower surface of the cover cap 1500 by the protrusion 1412.

Meanwhile, as shown in FIGS. 1 and 2, the housing body 1120 is formed in an enclosure shape having a second inner space 1121 formed therein. In the second inner space 1121 of the housing body 1120, the lower filter structure 1300, the cover cap 1500, and the connection tube 1400 are disposed in a coupled state as described above.

In this case, the cover cap 1500 is disposed at the lower portion of the second inner space 1121, the outer circumferential surface of the cover cap 1500 is disposed to contact the inner circumferential surface of the housing body 1120, and the lower surface of the cover cap 1500 is disposed to contact the inner lower surface of the housing body 1120. That is, by placing the lower filter 1330, and the second upper cap 1310 and the second lower cap 1320 to support it in the second inner space 1121 of the housing body 1120 in a state of being coupled through the cover cap 1500 without directly coupling them to the housing body 1120, an independent flow path inside the composite filter 1000 can be easily formed.

In this case, the housing body 1120 extends to correspond to the extension length of the connection tube 1400 so that the upper end of the connection tube 1400 may be disposed at the upper side of the second inner space 1121 of the housing body 1120 while the connection tube 1400 is disposed in the second inner space 1121.

In this case, as shown in FIG. 1, the upper side of the housing body 1120 is formed to be open to communicate with the outside. That is, it is formed so that the second inner space 1121 is open to the outside through the upper side. In this case, the upper side of the housing body 1120 may have an opening on the outer circumferential surface of the connection tube 1400 that protrudes to be spaced apart in the radial direction at a predetermined interval, but there is no limit to the shape as long as it can be coupled to the housing head 1110 to be described later to partition the second inner space 1121 from the outside.

As shown in FIGS. 1 and 2, the upper filter structure 1200 is disposed at the upper side of the second inner space 1121. Accordingly, the upper filter structure 1200 is disposed above the lower filter structure 1300, and is coupled to the connection tube 1400 and the cover cap 1500 to partition a space above the cover cap 1500 in the second inner space 1121 into the first housing body space PW1 and the second housing body space PC1.

To describe this in more detail, the upper filter structure 1200 of the composite filter 1000 according to the first embodiment of the present invention includes an upper filter 1230, a first upper cap 1210, and a first lower cap 1220.

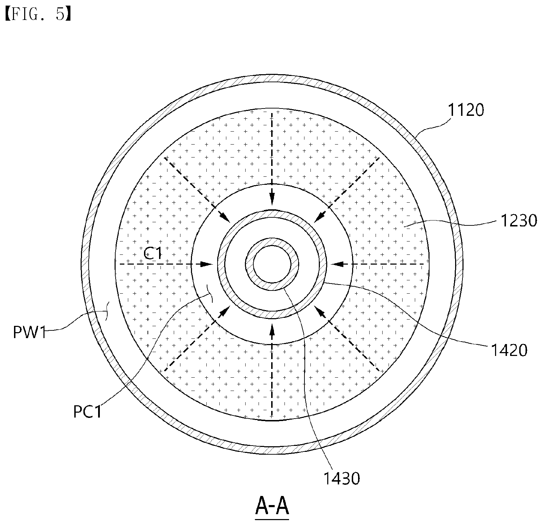

As shown in FIGS. 1 and 5, the upper filter 1230 partitions the first housing body space PW1 and the first housing body space PC1, and is formed in a hollow shape in which the first housing body space PW1 is formed outside and the second housing body space PC1 is formed inside.

In this case, like the lower filter 1330, the upper filter 1230 may be formed in a cylindrical shape as shown in FIG. 5, but the shape thereof is not limited if the lower filter 1330 is formed in a hollow shape. The upper filter 1230 serves to remove foreign substances contained in raw water while the raw water located in the first housing body space PW1 passes through the upper filter 1230 and moves to the second housing body space PC1, and there is no limitation on the type of filter used as the upper filter 1230. In addition, the upper filter 1230 and the lower filter 1330 may be the same type of filter or different types of filters, but are not limited thereto.

In this case, as shown in FIGS. 1 and 2, the first upper cap 1210 is coupled to the upper side of the upper filter 1230, and the first lower cap 1220 is coupled to the lower side of the upper filter 1230.

The first upper cap 1210 supports the upper side of the upper filter and is coupled to the housing head 1110 described later while supporting the upper filter 1230 so that all raw water of the first housing body space PW1 may move to the second housing body space PC1.

As shown in FIGS. 1 and 2, the first upper cap 1210 includes a first upper cap body 1212 and a first lower support member 1214 to support the upper filter 1230. The first upper cap body 1212 is formed in a centrally penetrated shape to cover the upper surface of the upper filter 1230 to correspond to the shape of the upper surface of the upper filter 1230, and the first lower support member 1214 is formed to protrude downward from the outer circumferential surface and the inner circumferential surface of the first upper cap body 1212. Accordingly, the upper end of the upper filter 1230 is inserted into and coupled to the first lower support member 1214.

As shown in FIG. 1, a guide member 1216 protruding upward is formed on the upper surface of the first upper cap 1210. As shown in FIG. 1, the guide member 1216 may be formed to extend upward from the first lower support member 1214. In this case, the guide member 1216 extends in length so that the guide member 1216 may surround the upper end of the connection tube 1400 while the upper filter structure 1200 is disposed in the second inner space 1121 of the housing body 1120.

The first lower cap 1220 also includes a first lower cap body 1222 and a first upper support member 1224 to support the upper filter 1230. The first lower cap body 1222 is formed in a centrally penetrated shape to cover the lower surface of the upper filter 1230 to correspond to the shape of the lower surface of the upper filter 1230, and the first upper support member 1224 is formed to protrude upward from the outer circumferential surface and the inner circumferential surface of the first lower cap body 1222. Accordingly, the lower end of the upper filter 1230 is inserted into and coupled to the first upper support member 1224.

The outer circumferential surface of the first upper support member 1224 of the first lower cap 1220 is hermetically coupled to the upper side of the cover cap 1500. That is, in the first lower cap 1220, the lower surface of the first lower cap body 1222 is supported by the upper surface of the second upper cap body 1312, and the outer surface of the first upper support member 1224 is coupled to the inner circumferential surface of the upper end of the cover cap 1500 as the upper side of the second upper cap body 1312. In this case, a sealing member may be disposed between the outer circumferential surface of the first upper support member 1224 and the inner circumferential surface of the cover cap 1500 for sealing coupling.

As shown in FIG. 1, a connection tube 1400 is disposed through the first upper cap 1210, the upper filter 1230, and the first lower cap 1220 in a state in which the first upper cap 1210, the upper filter 1230, and the first lower cap 1220 are coupled.

Accordingly, the second housing body space PC1 is defined as the inner surface of the upper filter structure 1200 formed by the coupling of the outer circumferential surface of the outer wall 1420 of the connection tube 1400 and the first upper cap 1210, the upper filter 1230, and the first lower cap 1220, and the first housing body space PW1 is defined by the outer surface of the upper filter structure 1200 and the inner surface of the housing body 1120. In particular, the first housing body space PW1 includes a space spaced apart between the outer circumferential surface of the guide member 1216 and the upper surface of the first upper cap body 1212 and the inner surface of the housing body 1120. Through this, the first housing body space PW1 may be connected to a first water inlet space RW1 formed in the housing head 1110 to be described later in a fluid communication manner.

As shown in FIGS. 1 and 3, a housing head 1110 is coupled to the upper side of the housing body 1120. As the housing head 1110 is coupled, the second inner space 1121 of the housing body 1120 is partitioned from the outside.

In this case, as shown in FIGS. 1 and 3, a first water inlet space RW1, a first water outlet space RC1, a second water inlet space RC2, and a second water outlet space RC3 are formed inside the housing head 1110. In this case, a first water inlet port 1115, a first water outlet port 1116, a second water inlet port 1117, and a second water outlet port 1118 are formed on one side of the housing head 1110.

The first water inlet port 1115 is connected to the first water inlet space RW1 and is formed to be capable of fluid communication with the outside so that the first raw water W1 may be introduced into the housing body 1120 from the outside through the first water inlet space RW1. The first water outlet port 1116 is connected to the first water outlet space RC1 and is formed to be capable of fluid communication with the outside to discharge first purified water C1 discharged to the first water outlet space RC1 to the outside through the first water outlet port 1116.

The second water inlet port 1117 is connected to the second water inlet space RC2 and is formed to be capable of fluid communication with the outside so that the second raw water C2 may be introduced into the housing body 1120 from the outside through the second water inlet space RC2. The second water outlet port 1118 is connected to the second water outlet space RC3 and is formed to be capable of fluid communication with the outside to discharge the second purified water C3 discharged to the second water outlet space RC3 to the outside through the second water outlet port 1118.

In this case, the first water inlet space RW1, the first water outlet space RC1, the second water inlet space RC2, and the second water outlet space RC3 formed inside the housing head 1110 are connected to the first housing body space PW1, the second housing body space PC1, the second connection tube space PC3, and the first connection tube space PC2, respectively.

To this end, the housing head 1110 of the composite filter 1000 according to the first embodiment of the present invention includes a housing head body 1114, a first partition wall 1113, a second partition wall 1112, and a third partition wall 1111.

As shown in FIG. 1, the housing head body 1114 is formed to cover the open upper side of the housing body 1120. Accordingly, the second inner space 1121 of the housing body 1120 and the outer space of the housing body 1120 are partitioned.

The first partition wall 1113 extending downward from the inner upper surface of the housing head body 1114 is formed inside the housing head body 1114 to partition the first water inlet space RW1 and the first water outlet space RC1. The lower end of the first partition wall 1113 is coupled to the upper end of the guide member 1216 of the first upper cap 1210. Accordingly, the first water inlet space RW1 and the space of the first housing body 1120 are connected. In this case, the first partition wall 1113 may be formed in a cylindrical shape to correspond to the guide member 1216, but the shape is not limited as long as it can partition the first water inlet space RW1.

The second partition wall 1112 is formed to extend downward from the inner upper surface of the housing head body 1114 to partition the first water outlet space RC1 formed inside the housing head body 1114 from the second water outlet space RC3. The lower end of the second partition wall 1112 is coupled to the upper end of the outer wall 1420 of the connection tube 1400. Accordingly, the first water outlet space RC1 and the second housing body space PC1 are connected. In this case, the second partition wall 1112 may be formed in a cylindrical shape to correspond to the outer wall 1420, but the shape is not limited as long as it can partition the first water outlet space RC1.

The third partition wall 1111 is formed to extend downward from the inner upper surface of the housing head body 1114 to partition the second water outlet space RC3 formed inside the housing head body 1114 from the second water inlet space RC2. The lower end of the third partition wall 1111 is coupled to the upper end of the guide wall 1430 of the connection tube 1400. Accordingly, the second water outlet space RC3 and the second connection tube space PC3 are connected, and the second water inlet space RC2 and the first connection tube space PC2 are connected. In this case, the third partition wall 1111 may be formed in a cylindrical shape to correspond to the guide wall 1430, but the shape is not limited as long as it can partition the second water inlet space RC2.

As shown in FIG. 3, the first partition wall 1113, the second partition wall 1112, and the third partition wall 1111 may be sequentially formed in a cylindrical shape having a small diameter, and may be arranged so that the centers of each circle coincide. In addition, as long as the first partition wall 1113 and the guide member 1216, the second partition wall 1112 and the outer wall 1420, and the third partition wall 1111 and the guide wall 1430 can be hermetically coupled, there is no limit to the coupling method.

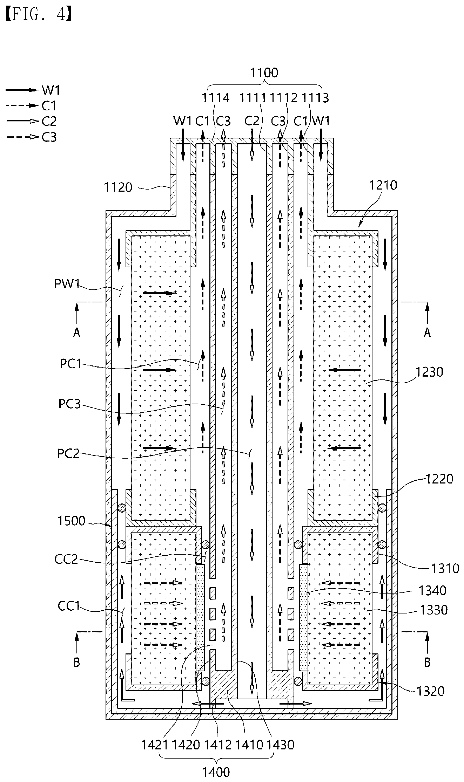

Hereinafter, a first flow path and a second flow path formed in the composite filter 1000 will be described with reference to FIGS. 4 to 6. FIG. 4 is a view illustrating a first flow path and a second flow path of a composite filter according to the first embodiment of the present invention. FIG. 5 is an enlarged cross-sectional view of part A of FIG. 4. FIG. 6 is an enlarged cross-sectional view of part B of FIG. 4.

As shown in FIGS. 3 and 4, the first flow path is a path through which the first raw water W1 is filtered into the first purified water C1 through the composite filter 1000 and discharged to the outside.

To describe this in more detail, the first raw water W1 flowing into the composite filter 1000 from the outside flows into the first water inlet space RW1 through the first water inlet port 1115. The first raw water W1 moves to the first housing body space PW1 along the inner surface of the first partition wall 1113, the guide member 1216, and the housing body 1120.

As shown in FIG. 5, the first raw water W1 located in the first housing body space PW1 is filtered while moving through the upper filter 1230 to the second housing body space PC1 to become the first purified water C1. The generated first purified water C1 moves from the second housing body space PC1 to the first water outlet space RC1 of the housing head 1110 along the guide member 1216 and the outer wall 1420. The first purified water C1 moving to the first water outlet space RC1 is discharged to the outside through the first water outlet port 1116.

Meanwhile, the second flow path is formed independently of the first flow path. Accordingly, two independent flow paths are formed inside one composite filter 1000 to generate purified water. That is, the second flow path is a path through which the second raw water C2 separate from the first raw water W1 is filtered into the second purified water C3 through the composite filter 1000 and discharged to the outside.

To describe this in more detail, the second raw water C2 flowing into the composite filter 1000 from the outside flows into the second water inlet space RC2 through the second water inlet port 1117. The second raw water C2 moves to the first connection tube space PC2 along the inner surface of the third partition wall 1111. The second raw water C2 moves to the inner lower surface of the cover cap 1500 and moves to the first cover cap space CC1.

As shown in FIG. 6, the second raw water C2 is filtered while moving from the first cover cap space CC1 through the lower filter 1330 to the second cover cap space CC2 to become the second purified water C3. The generated second purified water C3 may be further filtered through the additional filter 1340 disposed in the second cover cap space CC2. The second purified water C3 moves to the second connection tube space PC3 through the through hole 1421 formed at the lower end of the outer wall 1420. The second purified water C3 moves to the upper second water outlet space RC3 along the outer wall 1420 and the guide wall 1430. The second purified water C3 moved to the second water outlet space RC3 is discharged to the outside through the second water outlet port 1118.

Meanwhile, the first water outlet port 1116 of the composite filter 1000 according to the first embodiment of the present invention may be connected to the second water inlet port 1117 so that the first flow path and the second flow path are connected. Accordingly, the first purified water C1 becomes the second raw water C2 flowing into the second water inlet port 1117. Through this, the first raw water W1 may be sufficiently filtered through the upper filter 1230, the lower filter 1330, and the additional filter 1340.

The composite filter 1000 according to the first embodiment of the present invention may further include an external filter 1800. The external filter 1800 is disposed outside the composite filter 1000 so that one side thereof is connected to the first water outlet port 1116 and the other side thereof is connected to the second water inlet port 1117. Accordingly, the first raw water W1 may be additionally filtered through the external filter 1800.

In this case, the external filter 1800 may be a different type of filter from the upper filter 1230 or the lower filter 1330 disposed in the composite filter 1000, but is not limited thereto. In particular, in the case of a reverse osmosis filter in which concentrated water is generated in the process of filtering into purified water, it may not be disposed inside the composite filter 1000 like the upper filter 1230 and the lower filter 1330 due to the structure of the composite filter 1000 according to the first embodiment of the present invention, so it may be used in combination with the composite filter 1000 as an external filter 1800.

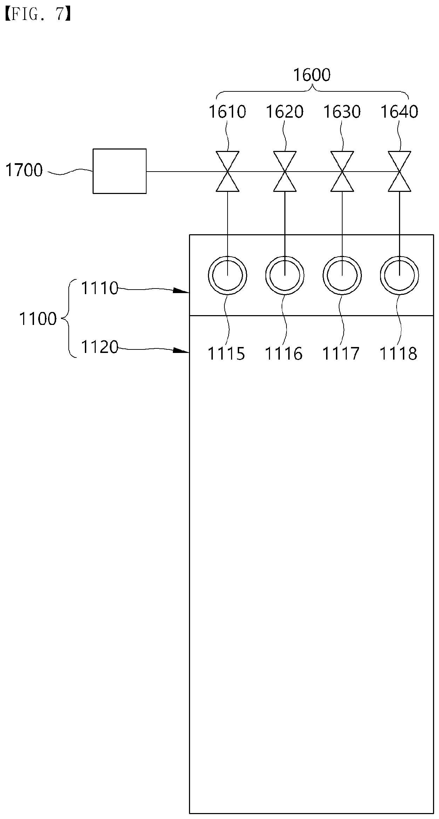

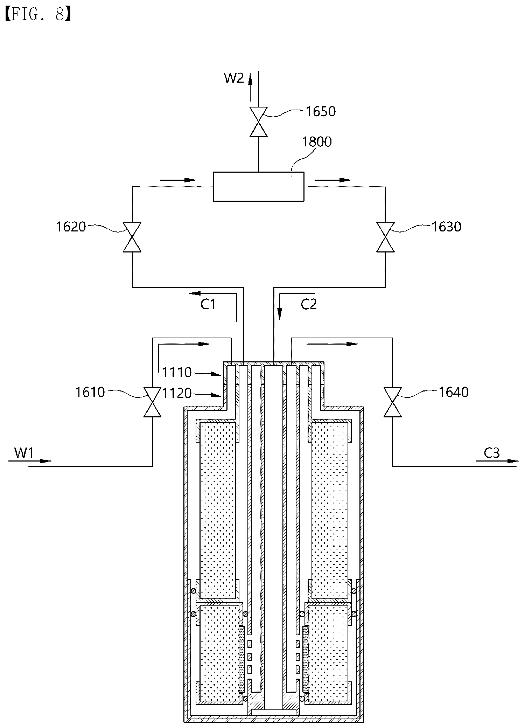

Hereinafter, a water purifier having the composite filter 1000 according to the first embodiment of the present invention will be described with reference to FIGS. 7 and 8. FIG. 7 is a configuration diagram illustrating a water purifier having a composite filter according to the first embodiment of the present invention. FIG. 8 is a configuration diagram illustrating the entire water piping diagram of a water purifier having a composite filter according to the first embodiment of the present invention.

As shown in FIGS. 7 and 8, the water purifier having the composite filter 1000 according to the first embodiment of the present invention includes a valve unit 1600 and a control unit 1700.

As shown in FIG. 7, the valve unit 1600 may include a first valve 1610 that regulates the flow of the first raw water W1, a second valve 1620 that regulates the flow of the first purified water C1, a third valve 1630 that regulates the flow of the second raw water C2, and a fourth valve 1640 that regulates the flow of the second purified water C3, and the control unit 1700 controls the opening and closing of the first valve 1610, the second valve 1620, the third valve 1630, and the fourth valve 1640.

In this case, when the first flow path and the second flow path of the composite filter 1000 according to the first embodiment of the present invention are used as independent flow paths, the user may, through the control unit 1700, regulate the first flow path by opening and closing the first valve 1610 and the second valve 1620, and regulate the second flow path by opening and closing the third valve 1630 and the fourth valve 1640.

On the other hand, when the first flow path and the second flow path of the composite filter 1000 according to the first embodiment of the present invention are used as connected flow paths, that is, when the first water outlet port 1116 and the second water inlet port 1117 are connected, the user may regulate the first flow path and the second flow path together by opening and closing the first valve 1610, the second valve 1620, the third valve 1630, and the fourth valve 1640 through the control unit 1700.

Meanwhile, as shown in FIG. 8, the water purifier having the composite filter 1000 according to the first embodiment of the present invention may further include an external filter 1800 disposed outside the composite filter 1000, with one side connected to the first water outlet port 1116 and the other side connected to the second water inlet port 1117. In this case, the external filter 1800 may have a flow path formed therein for discharging the concentrated water W2 generated during the filtering process, and the water purifier having the composite filter 1000 according to the first embodiment of the present invention may further include a fifth valve 1650 capable of opening and closing the flow path for discharging the concentrated water W2.

Accordingly, the user may, through the control unit 1700, regulate the first flow path and the second flow path together by opening and closing the first valve 1610, the second valve 1620, the third valve 1630, and the fourth valve 1640, and open and close the fifth valve 1650 in order to discharge the concentrated water W2 generated while the second purified water C3 discharged through the first flow path passes through the external filter 1800.

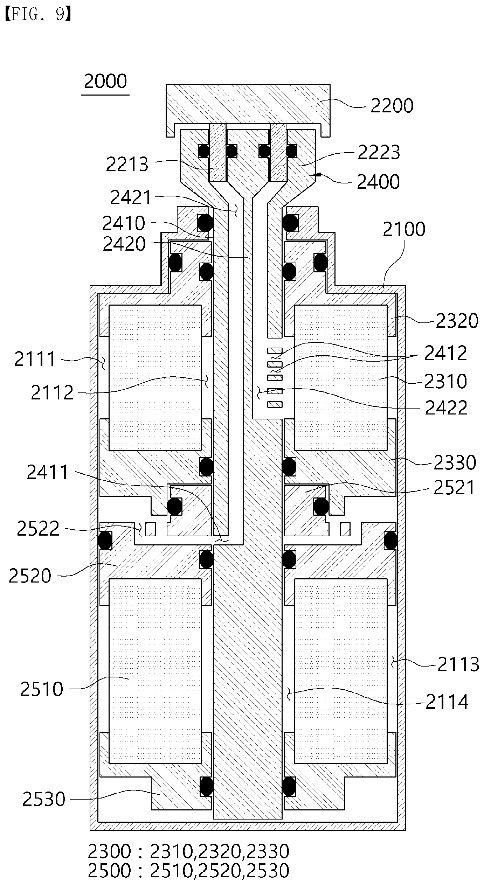

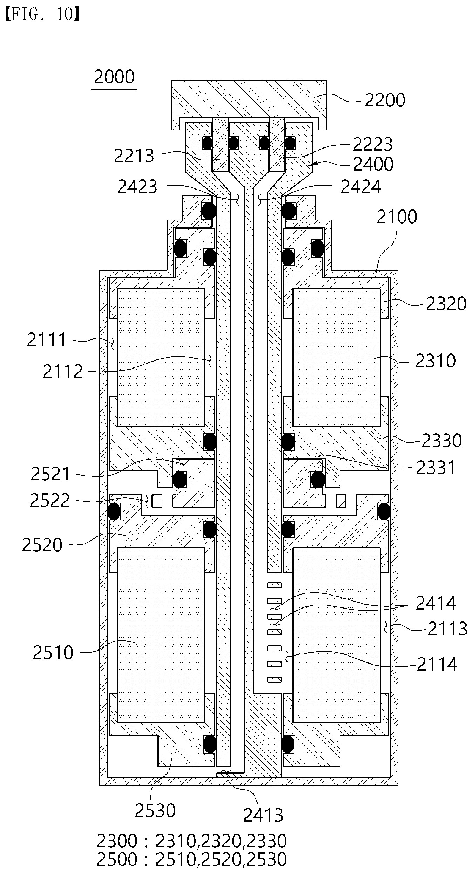

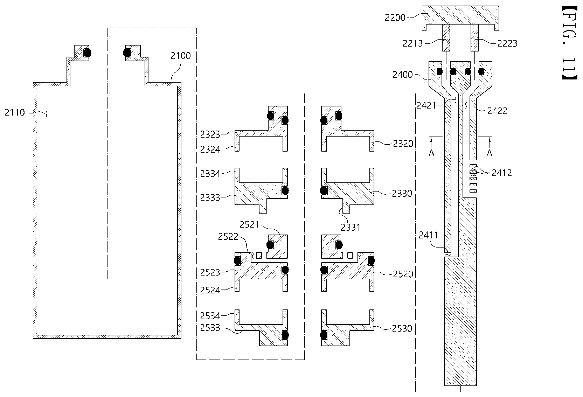

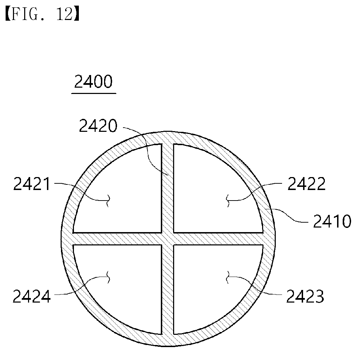

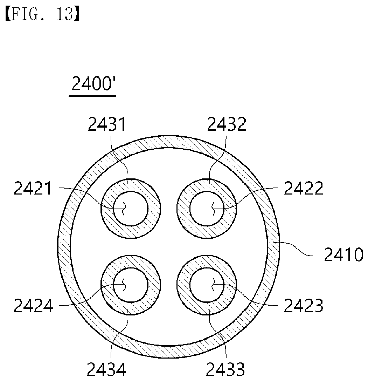

Hereinafter, a composite filter according to the second embodiment of the present invention will be described with reference to the accompanying drawings. FIG. 9 is a cross-sectional view illustrating a first connection tube space and a second connection tube space of a connection tube of a composite filter according to the second embodiment of the present invention. FIG. 10 is a cross-sectional view illustrating a third connection tube space and a fourth connection tube space of a connection tube of a composite filter according to the second embodiment of the present invention. FIG. 11 is an exploded cross-sectional view illustrating a housing body, a first filter structure, a second filter structure, and a connection tube of a composite filter according to the second embodiment of the present invention. FIG. 12 is an enlarged cross-sectional view illustrating part A-A of a connection tube according to the second embodiment of the present invention of FIG. 11. FIG. 13 is an enlarged cross-sectional view illustrating part A-A of a connection tube according to a modified example of the second embodiment of the present invention of FIG. 11.

As shown in FIG. 9, the composite filter 2000 according to the second embodiment of the present invention includes a housing body 2100, a first filter structure 2300, a connection tube 2400, a second filter structure 2500, and a housing head 2200, thereby forming a first flow path and a second flow path therein, independently.

As shown in FIGS. 9 and 10, the housing body 2100 is formed in an enclosure shape having a first inner space 2110 formed therein. The housing body 2100 may have a circular cross-section perpendicular to an axis extending in the up-down direction, but the shape thereof is not limited as long as the first inner space 2110 may be formed to extend in the up-down direction therein.

In this case, the housing body 2100 is formed such that the upper side thereof is open and the lower side thereof is closed, as shown in FIGS. 9 and 10. Accordingly, the connection tube 2400 to be described later is inserted into the open upper side of the housing body 2100.

The first filter structure 2300 is disposed in a first inner space 2110 to partition the first inner space 2110 into a first housing body space 2111 and a second housing body space 2112. To this end, as shown in FIGS. 9 and 11, the first filter structure 2300 of the composite filter 2000 according to the second embodiment of the present invention includes a first filter 2310, a first upper cap 2320, and a first lower cap 2330.

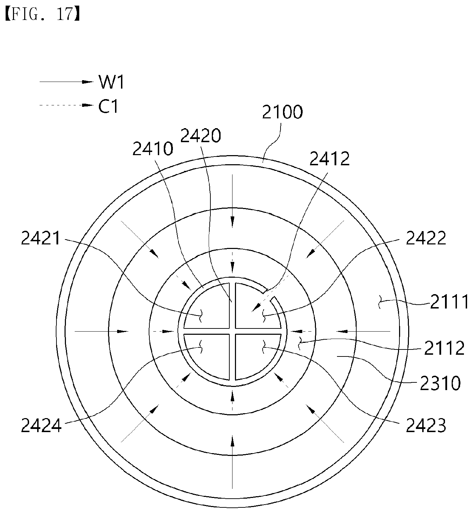

As shown in FIGS. 9 and 17, the first filter 2310 partitions the first housing body space 2111 and the second housing body space 2112. To describe this in more detail, the first filter 2310 partitions the first housing body space 2111 defined by the outer circumferential surface of the first filter 2310 and the inner circumferential surface of the housing body 2100, and the second housing body space 2112 defined by the inner circumferential surface of the first filter 2310 and the outer circumferential surface of the connection tube 2400 to be described later.

In this case, the first filter 2310 is formed in a hollow shape so that the first housing body space 2111 is formed outside the first filter 2310 and the second housing body space 2112 is formed inside thereof. The first filter 2310 may be formed in a cylindrical shape as shown in FIG. 17, but the shape thereof is not limited if the first filter 2310 is formed in a hollow shape.

The first filter 2310 serves to remove foreign substances contained in raw water while the raw water located in the first housing body space 2111 passes through the first filter 2310 and moves to the second housing body space 2112, and there is no limitation on the type of filter used as the first filter 2310.

In this case, as shown in FIGS. 9 and 11, the first upper cap 2320 is coupled to the upper side of the first filter 2310, and the first lower cap 2330 is coupled to the lower side of the first filter 2310.

The first upper cap 2320 supports the upper side of the first filter 2310 and is hermetically coupled to the upper inner circumferential surface of the housing body 2100 while supporting the first filter 2310 so that all raw water of the first housing body space 2111 may move to the second housing body space 2112. To this end, a sealing member may be disposed on the outer circumferential surface of the first upper cap 2320.

As shown in FIGS. 9 and 11, the first upper cap 2320 includes a first upper cap body 2323 and a first lower support member 2324 to support the first filter 2310. The first upper cap body 2323 is formed in a centrally penetrated shape to cover the upper surface of the first filter 2310 to correspond to the shape of the upper surface of the first filter 2310, and the first lower support member 2324 is formed to protrude downward from the outer circumferential surface and the inner circumferential surface of the first upper cap body 2323. Accordingly, the upper end of the first filter 2310 is inserted into and coupled to the first lower support member 2324.

As shown in FIG. 11, the first lower cap 2330 also includes a first lower cap body 2333 and a first upper support member 2334 to support the first filter 2310. The first lower cap body 2333 is formed in a centrally penetrated shape to cover the lower surface of the first filter 2310 to correspond to the shape of the lower surface of the first filter 2310, and the first upper support member 2334 is formed to protrude upward from the outer circumferential surface and the inner circumferential surface of the first lower cap body 2333. Accordingly, the lower end of the first filter 2310 is inserted into and coupled to the first upper support member 2334.

Meanwhile, as shown in FIG. 10, the second filter structure 2500 is disposed below the first filter structure 2300. That is, the first filter structure 2300 is disposed at the upper side of the first inner space 2110 of the housing body 2100, and the second filter structure 2500 is disposed at the lower side thereof.

The second filter structure 2500 partitions the first inner space 2110 except for the first housing body space 2111 and the second housing body space 2112 partitioned by the first filter structure 2300 into a third housing body space 2113 and a fourth housing body space 2114. To this end, as shown in FIGS. 10 and 11, the second filter structure 2500 of the composite filter 2000 according to the second embodiment of the present invention includes a second filter 2510, a second upper cap 2520, and a second lower cap 2530.

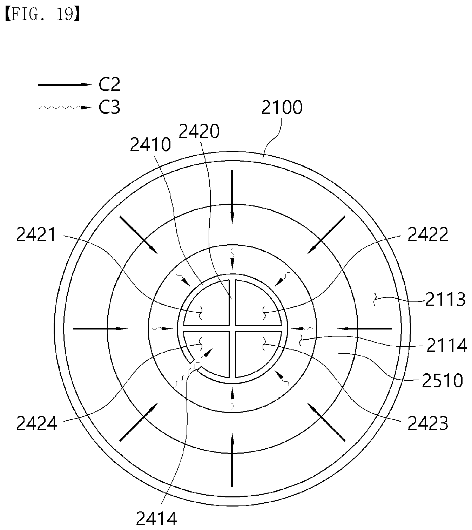

As shown in FIGS. 10 and 19, the second filter 2510 partitions the third housing body space 2113 and the fourth housing body space 2114. To describe this in more detail, the second filter 2510 partitions the third housing body space 2113 defined by the outer circumferential surface of the second filter 2510 and the inner circumferential surface of the housing body 2100, and the fourth housing body space 2114 defined by the inner circumferential surface of the second filter 2510 and the outer circumferential surface of the connection tube 2400 to be described later.

In this case, the second filter 2510 is formed in a hollow shape so that the third housing body space 2113 is formed outside the second filter 2510 and the fourth housing body space 2114 is formed inside thereof. The first filter 2310 may be formed in a cylindrical shape as shown in FIG. 19, but the shape thereof is not limited if the first filter 2310 is formed in a hollow shape.

The second filter 2510 serves to remove foreign substances contained in raw water while the raw water located in the third housing body space 2113 passes through the second filter 2510 and moves to the fourth housing body space 2114, and there is no limitation on the type of filter used as the second filter 2510. That is, each of the first filter 2310 and the second filter 2510 is an independent filter and may be the same type of filter or different types of filters.

In this case, as shown in FIGS. 10 and 11, the second upper cap 2520 is coupled to the upper side of the second filter 2510, and the second lower cap 2530 is coupled to the lower side of the second filter 2510.

The second upper cap 2520 supports the upper side of the second filter 2510 and is hermetically coupled to the lower inner circumferential surface of the housing body 2100 while supporting the second filter 2510 so that all raw water of the third housing body space 2113 may move to the fourth housing body space 2114. To this end, a sealing member may be disposed on the outer circumferential surface of the second upper cap 2520.

As shown in FIGS. 10 and 11, the second upper cap 2520 includes a second upper cap body 2523 and a second lower support member 2524 to support the second filter 2510. The second upper cap body 2523 is formed in a centrally penetrated shape so as to cover the upper surface of the second filter 2510 and correspond to the shape of the upper surface of the second filter 2510. The second lower support member 2524 is formed to protrude downward from the outer circumferential surface and the inner circumferential surface of the second upper cap body 2523. Accordingly, the upper end of the second filter 2510 is inserted into and coupled to the second lower support member 2524.

As shown in FIGS. 10 and 11, a coupling protrusion 2521 is formed to protrude upward on the upper surface of the second upper cap 2520, and more particularly, is formed to protrude upward along the outer circumferential surface of the connection tube 2400 to be described later. Accordingly, the coupling protrusion 2521 is formed in the central portion of the upper surface of the second upper cap 2520, and is formed in a hollow cylindrical shape so that the connection tube 2400 to be described later can penetrate. There is no limitation on the shape of the cross-section perpendicular to the protruding direction of the outer circumferential surface of the coupling protrusion 2521.

The coupling protrusion 2521 is inserted into and coupled to a coupling groove 2331 formed by being depressed upward along the outer circumferential surface of the connection tube 2400 to be described later on the lower surface of the second lower cap 2530. The coupling groove 2331 is formed in the central portion of the lower surface of the second lower cap 2530 to correspond to the coupling protrusion 2521. As long as the shape of the cross-section perpendicular to the depression direction of the coupling groove 2331 may be formed to correspond to the coupling protrusion 2521, the shape thereof is not limited.

In this case, a sealing member may be disposed between the outer circumferential surface of the coupling protrusion 2521 and the inner circumferential surface of the coupling groove 2331 as shown in FIG. 9 so that the coupling protrusion 2521 may be hermetically coupled while being inserted into the coupling groove 2331.

Meanwhile, as shown in FIGS. 10 and 11, when the second filter structure 2500 is disposed below the first filter structure 2300, a connection space 2522 is formed in the second upper cap 2520 to connect the first connection tube space 2421 of the connection tube 2400 to be described later and the first housing body space 2111. However, the connection space 2522 will be described later with a description of the connection tube 2400.

As shown in FIG. 11, the second lower cap 2530 includes a second lower cap body 2533 and a second upper support member 2534 to support the lower side of the second filter 2510. The second lower cap body 2533 is formed in a centrally penetrated shape to cover the lower surface of the second filter 2510 to correspond to the shape of the lower surface of the second filter 2510, and the second upper support member 2534 is formed to protrude upward from the outer circumferential surface and the inner circumferential surface of the second lower cap body 2533. Accordingly, the lower end of the second filter 2510 is inserted into and coupled to the second upper support member 2534.

As shown in FIGS. 9 and 11, the connection tube 2400 passes through and couples to the first upper cap 2320, the first filter 2310, and the first lower cap 2330 in a state in which the first upper cap 2320, the first filter 2310, and the first lower cap 2330 are coupled. In this case, the first filter structure 2300 is coupled to the upper side of the connection tube 2400.

To this end, the connection tube 2400 has a cylindrical shape formed by extending a length in the up-down direction, and has a first connection tube space 2421 and a second connection tube space 2422 formed therein extending in the longitudinal direction of the connection tube 2400. In this case, the first connection tube space 2421 and the second connection tube space 2422 are formed to be independent of each other.

The connection tube 2400 is disposed to pass through the first upper cap 2320 and the first lower cap 2330, and is hermetically coupled to the first upper cap 2320 and the first lower cap 2330. That is, as shown in FIGS. 9 and 11, a sealing member may be disposed between the inner surfaces of the first upper cap 2320 and the first lower cap 2330 and the outer circumferential surface of the connection tube 2400. Accordingly, as the outer circumferential surface of the connection tube 2400 is coupled to the first lower cap 2330, the connection tube 2400 may partition the second housing body space 2112 defined by the inner circumferential surface of the first filter 2310 and the outer circumferential surface of the connection tube 2400.

In addition, a third connection tube space 2423 and a fourth connection tube space 2424 extending in the longitudinal direction of the connection tube 2400 may be further formed inside the connection tube 2400. In this case, the third connection tube space 2423 and the fourth connection tube space 2424 are formed to be independent of each other together with the first connection tube space 2421 and the second connection tube space 2422.

In this case, the first connection tube space 2421 to the fourth connection tube space 2424 may be disposed in the circumferential direction along the inner circumferential surface of the outer wall 2410 of the connection tube 2400, as shown in FIG. 12. In addition, the areas of cross-sections of the first connection tube space 2421 to the fourth connection tube space 2424 may be formed equal.

The connection tube 2400 may be disposed to penetrate the first upper cap 2320, the first filter 2310, and the first lower cap 2330, and may penetrate the second upper cap 2520, the second filter 2510, and the second lower cap 2530. In this case, the connection tube 2400 is hermetically coupled to the second upper cap 2520 and the second lower cap 2530, similar to the first upper cap 2320 and the first lower cap 2330. That is, as shown in FIGS. 2 and 11, a sealing member may be disposed between the inner surfaces of the second upper cap 2520 and the second lower cap 2530 and the outer circumferential surface of the connection tube 2400. Accordingly, the outer circumferential surface of the outer wall 2410 of the connection tube 2400 is coupled to the second upper cap 2520, thereby partitioning the first housing body space 2111 and the second housing body space 2112 from the third housing body space 2113 and the fourth housing body space 2114.

In addition, as the outer circumferential surface of the outer wall 2410 of the connection tube 2400 is coupled to the second lower cap 2530, thereby capable of partitioning the fourth housing body space 2114 defined by the inner circumferential surface of the second filter 2510 and the outer circumferential surface of the connection tube 2400.

In this case, the connection tube 2400 of the composite filter 2000 according to the second embodiment of the present invention may include an outer wall 2410 and a guide wall 2420 to form the first connection tube space 2421 to the fourth connection tube space 2424 therein.

The outer wall 2410 is formed in a tubular shape extending in the up-down direction and is disposed at the outermost part of the connection tube 2400. The shape of the cross-section perpendicular to the extension direction of the outer wall 2410 is not limited as long as it can be hermetically coupled to the first upper cap 2320, the first lower cap 2330, the second upper cap 2520, and the second lower cap 2530.

In this case, as shown in FIG. 12, a guide wall 2420 is disposed inside the outer wall 2410 of the connection tube 2400 of the composite filter 2000 according to the second embodiment of the present invention to form the first connection tube space 2421 to the fourth connection tube space 2424 extending in the up-down direction. In this case, the guide wall 2420 may have a cross-section perpendicular to the longitudinal direction formed in a crisscross shape so that the first connection tube space 2421 to the fourth connection tube space 2424 may be arranged in parallel in the circumferential direction of the outer wall 2410.

The first connection tube space 2421 partitioned by the guide wall 2420 is formed to extend in the up-down direction like the connection tube 2400. In this case, the upper side of the first connection tube space 2421 extends to the upper end of the connection tube 2400 and opens to the upper side of the connection tube 2400, and the lower side thereof extends to a first portion of the outer wall 2410. In this case, the first portion is formed below the first filter structure 2300 in a state in which the first filter structure 2300 is coupled to the upper side of the connection tube 2400.

As shown in FIGS. 9 and 11, at least one first through hole 2411 is formed in the first portion. Accordingly, the first connection tube space 2421 and the first housing body space 2111 are connected to each other to fluidly communicate through the first through hole 2411. In this case, the length of the first connection tube space 2421 extending downward is not limited to the length extending if the lower end can be connected to the first housing body space 2111 through the first through hole 2411.

In this case, as shown in FIG. 9, when the second filter structure 2500 is disposed below the first filter structure 2300, the first portion may be located inside the second filter structure 2500. In this case, a connection space 2522 may be formed in the second upper cap 2520 to be connected to the first through hole 2411 formed in the first portion. Accordingly, the connection space 2522 connects the first housing body space 2111 and the first connection tube space 2421.

The connection space 2522 is not limited in shape as long as it may connect the first housing body space 2111 and the first connection tube space 2421. In the present embodiment, as shown in FIG. 9, one side of the connection space 2522 may be formed on one side of the inner circumferential surface of the second upper cap 2520, and the other side may be formed on one side of the upper surface of the second upper cap 2520.

Meanwhile, as shown in FIG. 9, the second connection tube space 2422 partitioned by the guide wall 2420 is formed to extend parallel to the first connection tube space 2421 in the up-down direction. In this case, the upper end of the second connection tube space 2422 extends to the upper end of the connection tube 2400 and opens to the upper side of the connection tube 2400, and the lower end thereof extends to a second portion of the outer wall 2410. In this case, the second portion is formed on the inner circumferential surface of the first filter 2310 in a state in which the first filter structure 2300 is coupled to the upper side of the connection tube 2400.

As shown in FIG. 9, at least one second through hole 2412 is formed in the second portion. Accordingly, the second connection tube space 2422 and the second housing body space 2112 are connected to each other to fluidly communicate through the second through hole 2412. In this case, the length of the second connection tube space 2422 extending downward is not limited to the length extending if the lower end can be connected to the second housing body space 2112 through the second through hole 2412.

As shown in FIG. 10, the third connection tube space 2423 partitioned by the guide wall 2420 is formed to extend in the up-down direction like the connection tube 2400. In this case, the upper side of the third connection tube space 2423 extends to the upper end of the connection tube 2400 and opens to the upper side of the connection tube 2400, and the lower side thereof extends to a third portion of the outer wall 2410. In this case, the third portion is formed below the second filter structure 2500 in a state in which the second filter structure 2500 is coupled to the lower side of the connection tube 2400.

As shown in FIG. 10, at least one third through hole 2413 is formed in the third portion. Accordingly, the third connection tube space 2423 and the third housing body space 2113 are connected to each other to fluidly communicate through the third through hole 2413. In this case, the length of the third connection tube space 2423 extending downward is not limited to the length extending if the lower end can be connected to the third housing body space 2113 through the third through hole 2413.

In this case, as shown in FIG. 10, the lower surface of the second lower cap 2530 of the second filter structure 2500 is spaced apart from the inner lower surface of the housing body 2100 by a predetermined interval so that the third connection tube space 2423 and the third housing body space 2113 may be connected through the third through hole 2413.

Meanwhile, as shown in FIG. 10, the fourth connection tube space 2424 partitioned by the guide wall 2420 is formed to extend parallel to the third connection tube space 2423 in the up-down direction. In this case, the upper end of the fourth connection tube space 2424 extends to the upper end of the connection tube 2400 and opens to the upper side of the connection tube 2400, and the lower end thereof extends to a fourth portion of the outer wall 2410. In this case, the fourth portion is formed on the inner circumferential surface of the second filter 2510 in a state in which the second filter structure 2500 is coupled to the lower side of the connection tube 2400.

As shown in FIG. 10, at least one fourth through hole 2414 is formed in the fourth portion. Accordingly, the fourth connection tube space 2424 and the fourth housing body space 2114 are connected to each other to fluidly communicate through the fourth through hole 2414. In this case, the length of the fourth connection tube space 2424 extending downward is not limited to the length extending if the lower end can be connected to the second housing body space 2112 through the fourth through hole 2414.

Referring to FIG. 13, the connection tube 2400 of the composite filter 2000 according to a modified example of the second embodiment of the present invention may include a first guide tube 2431, a second guide tube 2432, a third guide tube 2433, and a fourth guide tube 2434 in place of the guide wall 2420 to form the first connection tube space 2421 to the fourth connection tube space 2424 therein.

The first guide tube 2431 is a tube in which the first connection tube space 2421 is formed, and is formed to extend in length. The first guide tube 2431 is disposed inside the outer wall 2410 in parallel with the extension length direction of the connection tube 2400, the upper end is disposed at the upper side of the connection tube 2400, and the lower end extends to the first portion. In this case, the upper end of the first guide tube 2431 opens to the upper side of the connection tube 2400, and the lower end of the first guide tube 2431 is connected to the first through hole 2411 formed in the first portion, thereby connecting the first connection tube space 2421 and the first housing body space 2111 to each other.

The second guide tube 2432 is a tube in which the second connection tube space 2422 is formed, and is formed to extend in length. The second guide tube 2432 is disposed in parallel with the first guide tube 2431 inside the outer wall 2410 in the extension length direction of the connection tube 2400, the upper end is disposed at the upper side of the connection tube 2400, and the lower end extends to the second portion. In this case, the upper end of the second guide tube 2432 opens to the upper side of the connection tube 2400, and the lower end of the second guide tube 2432 is connected to the second through hole 2412 formed in the second portion, thereby connecting the second connection tube space 2422 and the second housing body space 2112 to each other.

The third guide tube 2433 is also a tube in which the third connection tube space 2423 is formed, and is formed to extend in length. The third guide tube 2433 is disposed inside the outer wall 2410 in parallel with the extension length direction of the connection tube 2400 together with the first guide tube 2431 and the second guide tube 2432, the upper end is disposed at the upper side of the connection tube 2400, and the lower end extends to the third portion. In this case, the upper end of the third guide tube 2433 opens to the upper side of the connection tube 2400, and the lower end of the third guide tube 2433 is connected to the third through hole 2413 formed in the third portion, thereby connecting the third connection tube space 2423 and the third housing body space 2113 to each other.

Likewise, the fourth guide tube 2434 is a tube in which the fourth connection tube space 2424 is formed, and is formed to extend in length. The fourth guide tube 2434 is disposed inside the outer wall 2410 in parallel with the extension length direction of the connection tube 2400, the upper end is disposed at the upper side of the connection tube 2400, and the lower end extends to the fourth portion. In this case, the upper end of the fourth guide tube 2434 opens to the upper side of the connection tube 2400, and the lower end of the fourth guide tube 2434 is connected to the fourth through hole 2414 formed in the fourth portion, thereby connecting the fourth connection tube space 2424 and the fourth housing body space 2114 to each other.

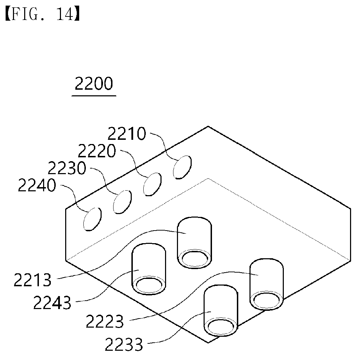

In this case, as shown in FIG. 14, the first guide tube 2431, the second guide tube 2432, the third guide tube 2433, and the fourth guide tube 2434 may be disposed along the circumference of the outer wall 2410 around the longitudinal central axis of the connection tube 2400.

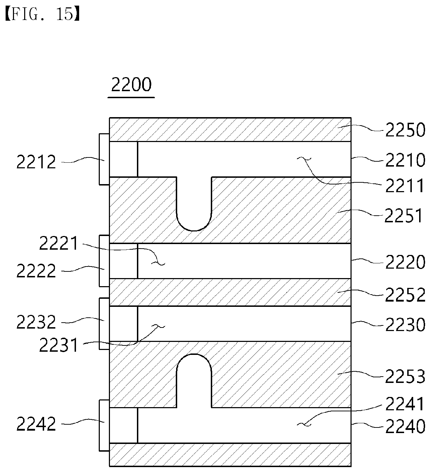

FIG. 14 is a perspective view illustrating a housing head of a composite filter according to the second embodiment of the present invention. FIG. 15 is a cross-sectional view illustrating a housing head of a composite filter according to the second embodiment of the present invention.

As shown in FIGS. 9 and 10, the housing head 2200 is coupled to the upper side of the housing body 2100, and more specifically, to the upper end of the connection tube 2400. In this case, the housing head 2200 has a second inner space formed therein.

In this case, as shown in FIG. 15, the second inner space of the housing head 2200 is partitioned into a first water inlet space 2211 connected to the first connection tube space 2421, a first water outlet space 2221 connected to the second connection tube space 2422, a second water inlet space 2231 connected to the third connection tube space 2423, and a second water outlet space 2241 connected to the fourth connection tube space 2424.

In this case, as shown in FIG. 15, the first water inlet space 2211, the first water outlet space 2221, the second water inlet space 2231, and the second water outlet space 2241 formed inside the housing head 2200 may be formed in parallel with each other by extending in length.

To this end, the housing head 2200 of the composite filter 2000 according to the second embodiment of the present invention may include a first partition wall 2251, a second partition wall 2252, and a third partition wall 2253.

In this case, as shown in FIG. 15, the first partition wall 2251 may partition the second inner space into the first water inlet space 2211 and the first water outlet space 2221; the second partition wall 2252 may partition the first water inlet space 2211 and the first water outlet space 2221 from the second water inlet space 2231; and the third partition wall 2253 may partition the first water inlet space 2211, the first water outlet space 2221, and the second water inlet space 2231 from the second water outlet space 2241. Accordingly, the first partition wall 2251, the second partition wall 2252, and the third partition wall 2253 may be formed to extend from one side to the other side of the housing head 2200 and be formed in parallel.

In this case, as shown in FIGS. 14 and 15, the housing head 2200 according to the second embodiment of the present invention includes a first water inlet port 2210, a first water outlet port 2220, a second water inlet port 2230, and a second water outlet port 2240 on one side.

The first water inlet port 2210 is connected to the first water inlet space 2211 and is formed to be capable of fluid communication with the outside so that first raw water W1 may be introduced into the housing body 2100 from the outside through the first water inlet space 2211. The first water outlet port 2220 is connected to the first water outlet space 2221 and is formed to be capable of fluid communication with the outside to discharge the first purified water C1 discharged to the first water outlet space 2221 to the outside through the first water outlet port 2220.

The second water inlet port 2230 is connected to the second water inlet space 2231 and is formed to be capable of fluid communication with the outside so that the second raw water C2 may be introduced into the housing body 2100 from the outside through the second water inlet space 2231. The second water outlet port 2240 is connected to the second water outlet space 2241 and is formed to be capable of fluid communication with the outside to discharge the second purified water C3 discharged to the second water outlet space 2241 to the outside through the second water outlet port 2240.

In this case, the first water inlet port 2210, the first water outlet port 2220, the second water inlet port 2230, and the second water outlet port 2240 may be formed in plural. In the present embodiment, two are formed, respectively. Accordingly, a pair of first water inlet ports 2210 may be formed at both ends of the first water inlet space 2211 in the longitudinal direction, respectively. Similarly, a pair of first water outlet ports 2220 may be formed at both ends of the first water outlet space 2221 in the longitudinal direction, respectively, a pair of second water inlet ports 2230 may be formed at both ends of the second water inlet space 2231 in the longitudinal direction, respectively, and a pair of second water outlet ports 2240 may be formed at both ends of the second water outlet space 2241 in the longitudinal direction, respectively.

In this way, a plurality of composite filters 2000 according to the second embodiment of the present invention may be connected and used by forming a plurality of first water inlet ports 2210, first water outlet ports 2220, second water inlet ports 2230, and second water outlet ports 2240. In this case, there is no limitation on a method of connecting the plurality of composite filters 2000.

For example, when a plurality of composite filters 2000 are connected in parallel, the first water inlet port 2210 and the first water outlet port 2220 of any one composite filter 2000 of the plurality of composite filters 2000 may be connected to the first water inlet port 2210 and the first water outlet port 2220 of another composite filter 2000 of the plurality of composite filters 2000, respectively.

On the other hand, as another example, when a plurality of composite filters 2000 are connected in series, the first water inlet port 2210 and the first water outlet port 2220 of any one composite filter 2000 of the plurality of composite filters 2000 may be connected to the first water outlet port 2220 and the first water inlet port 2210 of another composite filter 2000 of the plurality of composite filters 2000, respectively.

In this case, as shown in FIG. 15, the housing head 2200 according to the second embodiment of the present invention may include a first water inlet port cover 2212, a first water outlet port cover 2222, a second water inlet port cover 2232, and a second water outlet port cover 2242 capable of closing the first water inlet port 2210, the first water outlet port 2220, the second water inlet port 2230, and the second water outlet port 2240, respectively.

Meanwhile, as shown in FIG. 14, the housing head 2200 of the composite filter 2000 according to the second embodiment of the present invention includes a hollow first connection member 2213 connecting the first connection tube space 2421 and the first water inlet space 2211, a hollow second connection member 2223 connecting the second connection tube space 2422 and the first water outlet space 2221, a hollow third connection member 2233 connecting the third connection tube space 2423 and the second water inlet space 2231, and a hollow fourth connection member 2243 connecting the fourth connection tube space 2424 and the second water outlet space 2241.

In this case, as shown in FIG. 14, the first connection member 2213, the second connection member 2223, the third connection member 2233, and the fourth connection member 2243 may be formed to protrude from the lower surface of the housing head 2200.

In the first connection member 2213, in order to connect the first connection tube space 2421 and the first water inlet space 2211, the outer circumferential surface of the first connection member 2213 and the inner circumferential surface of the first connection tube space 2421 are hermetically coupled. To this end, a cross-section perpendicular to the longitudinal direction of the first connection member 2213 and a cross-section perpendicular to the longitudinal direction of the upper end of the first connection tube space 2421 are formed to correspond. As for the second connection member 2223, the third connection member 2233, and the fourth connection member 2243, their cross-sections are also formed to correspond like the first connection member 2213 such that their outer circumferential surfaces are hermetically coupled to the inner circumferential surfaces of the second connection tube space 2422, the third connection tube space 2423, and the fourth connection tube space 2424. In this case, there is no limitation on the shape of the cross-section, and it may be formed in a circular shape, as shown in FIG. 14.

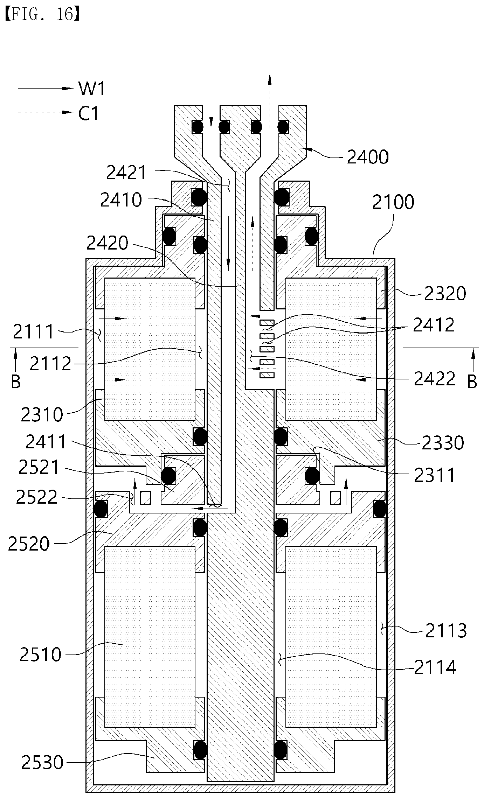

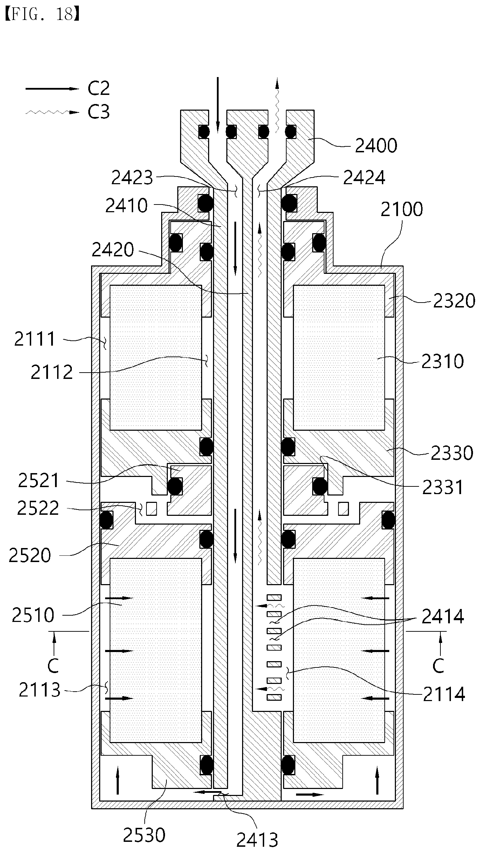

Hereinafter, a first flow path and a second flow path formed in the composite filter 2000 will be described with reference to FIGS. 16 to 18. FIG. 16 is a cross-sectional view illustrating a first flow path of a composite filter according to the second embodiment of the present invention. FIG. 17 is a cross-sectional view of part B-B of FIG. 16. FIG. 18 is a cross-sectional view illustrating a second flow path of a composite filter according to the second embodiment of the present invention. FIG. 19 is a cross-sectional view of part C-C of FIG. 18.

As shown in FIG. 16, the first flow path is a path through which the first raw water W1 is filtered into the first purified water C1 through the composite filter 2000 and discharged to the outside.

To describe this in more detail, the first raw water W1 flowing into the composite filter 2000 from the outside flows into the first water inlet space 2211 through the first water inlet port 2210. The first raw water W1 moves along the inner surface of the first partition wall 2251 and the housing head 2200, and moves to the first connection tube space 2421 through the first connection member 2213.

As shown in FIG. 16, the first raw water W1 moved downward along the first connection tube space 2421 and discharged through the first through hole 2411 moves to the first housing body space 2111 along the connection space 2522 of the second upper cap 2520.

As shown in FIGS. 16 and 17, the first raw water W1 located in the first housing body space 2111 is filtered while moving through the first filter 2310 to the second housing body space 2112 to become the first purified water C1. The generated first purified water C1 moves from the second housing body space 2112 to the second connection tube space 2422 of the connection tube 2400 through the second through hole 2412. The first purified water C1 moves upward along the second connection tube space 2422, and moves to the first water outlet space 2221 through the second connection member 2223. The first purified water C1 moving to the first water outlet space 2221 is discharged to the outside through the first water outlet port 2220.

Meanwhile, the second flow path is formed independently of the first flow path. Accordingly, two independent flow paths are formed inside one composite filter 2000 to generate purified water. That is, the second flow path is a path through which the second raw water C2 separate from the first raw water W1 is filtered into the second purified water C3 through the composite filter 2000 and discharged to the outside.

To describe this in more detail, as shown in FIGS. 18 and 19, the second raw water C2 flowing into the composite filter 2000 from the outside flows into the second water inlet space 2231 through the second water inlet port 2230. The second raw water C2 moves to the third connection tube space 2423 through the third connection member 2233.

As shown in FIG. 18, the second raw water C2 moved downward along the third connection tube space 2423 and discharged through the third through hole 2413 moves to the third housing body space 2113.

As shown in FIG. 19, the second raw water C2 is filtered while moving from the third housing body space 2113 through the second filter 2510 to the fourth housing body space 2114 to become the second purified water C3. The second purified water C3 moves from the fourth housing body space 2114 to the fourth connection tube space 2424 through the fourth through hole 2414. The second purified water C3 moves upward along the fourth connection tube space 2424.

The second purified water C3 moved upward moves to the second water outlet space 2241 through the fourth connection member 2243. The second purified water C3 moved to the second water outlet space 2241 is discharged to the outside through the second water outlet port 2240.

Meanwhile, the first water outlet port 2220 of the composite filter 2000 according to the second embodiment of the present invention may be connected to the second water inlet port 2230 so that the first flow path and the second flow path are connected. Accordingly, the first purified water C1 becomes the second raw water C2 flowing into the second water inlet port 2230. Through this, the first raw water W1 may be sufficiently filtered through the first filter 2310 and the second filter 2510.

The composite filter 2000 according to the second embodiment of the present invention may further include an external filter 2800. The external filter 2800 is disposed outside the composite filter 2000 so that one side thereof is connected to the first water outlet port 2220 and the other side thereof is connected to the second water inlet port 2230. Accordingly, the first raw water W1 may be additionally filtered through the external filter 2800.

In this case, the external filter 2800 may be a different type of filter from the first filter 2310 or the second filter 2510 disposed in the composite filter 2000, but is not limited thereto. In particular, in the case of a reverse osmosis filter in which concentrated water is generated in the process of filtering into purified water, it may not be disposed inside the composite filter 2000 like the first filter 2310 and the second filter 2510 due to the structure of the composite filter 2000 according to the second embodiment of the present invention, so it may be used in combination with the composite filter 2000 as an external filter 2800.

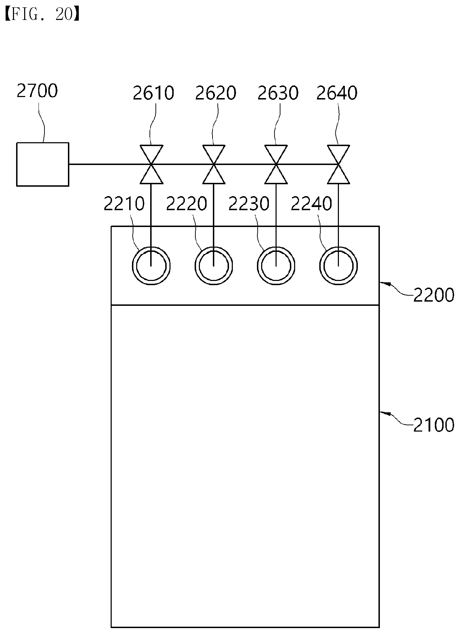

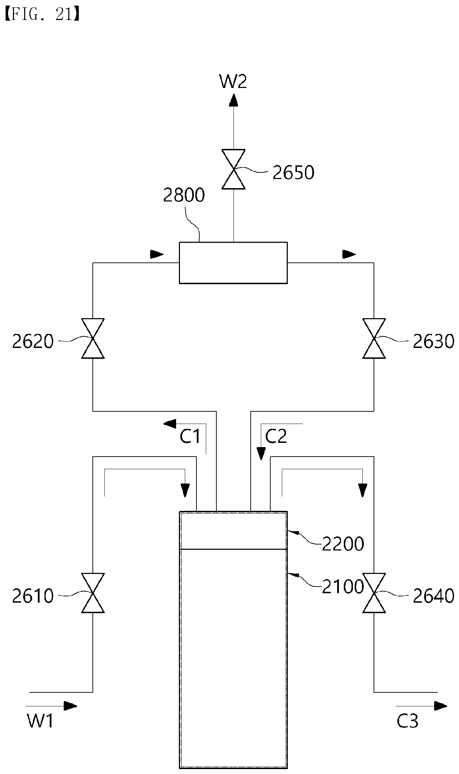

Hereinafter, a water purifier having the composite filter 2000 according to the second embodiment of the present invention will be described with reference to FIGS. 20 and 21. FIG. 20 is a configuration diagram illustrating a water purifier having a composite filter according to the second embodiment of the present invention. FIG. 21 is a configuration diagram illustrating the entire water piping diagram of a water purifier having a composite filter according to the second embodiment of the present invention.

As shown in FIGS. 20 and 21, the water purifier having the composite filter 2000 according to the second embodiment of the present invention includes a valve unit 2600 and a control unit 2700.

As shown in FIG. 20, the valve unit 2600 may include a first valve 2610 that regulates the flow of the first raw water W1, a second valve 2620 that regulates the flow of the first purified water C1, a third valve 2630 that regulates the flow of the second raw water C2, and a fourth valve 2640 that regulates the flow of the second purified water C3, and the control unit 2700 controls the opening and closing of the first valve 2610, the second valve 2620, the third valve 2630, and the fourth valve 2640.

In this case, when the first flow path and the second flow path of the composite filter 2000 according to the second embodiment of the present invention are used as independent flow paths, the user may, through the control unit 2700, regulate the first flow path by opening and closing the first valve 2610 and the second valve 2620, and regulate the second flow path by opening and closing the third valve 2630 and the fourth valve 2640.

On the other hand, when the first flow path and the second flow path of the composite filter 2000 according to the second embodiment of the present invention are used as connected flow paths, that is, when the first water outlet port 2220 and the second water inlet port 2230 are connected, the user may regulate the first flow path and the second flow path together by opening and closing the first valve 2610, the second valve 2620, the third valve 2630, and the fourth valve 2640 through the control unit 2700.

Meanwhile, as shown in FIG. 21, the water purifier having the composite filter 2000 according to the second embodiment of the present invention may further include an external filter 2800 disposed outside the composite filter 2000, with one side connected to the first water outlet port 2220 and the other side connected to the second water inlet port 2230. In this case, the external filter 2800 may have a flow path formed therein for discharging the concentrated water W2 generated during the filtering process, and the water purifier having the composite filter 2000 according to the second embodiment of the present invention may further include a fifth valve 2650 capable of opening and closing the flow path for discharging the concentrated water W2.

Accordingly, the user may, through the control unit 2700, regulate the first flow path and the second flow path together by opening and closing the first valve 2610, the second valve 2620, the third valve 2630, and the fourth valve 2640, and open and close the fifth valve 2650 in order to discharge the concentrated water W2 generated while the second purified water C3 discharged through the first flow path passes through the external filter 2800.

Although the composite filter and the water purifier having the composite filter according to various embodiments of the present invention have been described above, it can be clearly understood by those skilled in the art that the composite filter according to the present embodiment may not only be applied to a water purifier, but may also be used in a device that needs to receive a plurality of filters filtering raw water as a single structure.

As described above, preferred embodiments according to the present invention have been examined, and it is obvious to those skilled in the art that the present invention can be embodied in other specific forms without departing from the spirit or scope of the present invention in addition to the above-described embodiments. Therefore, the above-described embodiments are to be construed as illustrative rather than restrictive, and accordingly, the present invention is not limited to the above description and may be modified within the scope of the appended claims and their equivalents.

## Claims

1. A composite filter, comprising:
a cover cap in which a first inner space is formed therein;
a lower filter structure disposed in the first internal space and including a lower filter;
a connection tube extending in length, having a first connection tube space and a second connection tube space formed therein extending in the longitudinal direction, having a lower end coupling to the lower filter structure, thereby, together with the lower filter structure, partitioning the first inner space into a first cover cap space and a second cover cap space;
a housing body in which a second inner space with an upper side opening to the outside is formed and the cover cap, the lower filter structure, and the connection tube are disposed in the second inner space;
an upper filter structure comprising an upper filter, the upper filter structure being disposed above the lower filter structure, coupled to the connection tube, and having a lower end coupled to the cover cap, thereby partitioning a space above the cover cap among the second inner space into a first housing body space and a second housing body space;
a housing head coupled to the upper side of the housing body, having a first water inlet space, a first water outlet space, a second water inlet space, and a second water outlet space formed therein, and having a first water inlet port connected to the first water inlet space, a first water outlet port connected to the first water outlet space, a second water inlet port connected to the second water inlet space, and a second water outlet port connected to the second water outlet space;
a first flow path formed such that through which first raw water introduced into the first water inlet port passes through the first water inlet space, the first housing body space, the upper filter, the second housing body space, and the first water outlet space, and then is discharged through the first water outlet port into first purified water; and
a second flow path formed such that through which second raw water introduced into the second water inlet port passes through the second water inlet space, the first connection tube space, the first cover cap space, the lower filter, the second cover cap space, the second connection tube space, and the second water outlet space, and then is discharged through the second water outlet port into second purified water.

2. The composite filter of claim 1,
wherein the housing head comprises:
a housing head body covering the upper side of the housing body;
a first partition wall extending downward from the housing head body to partition the first water inlet space and the first water outlet space;
a second partition wall extending downward from the housing head body to partition the first water outlet space and the second water outlet space; and
a third partition wall extending downward from the housing head body to partition the second water outlet space and the second water inlet space,
wherein the first partition wall, the second partition wall, and the third partition wall are sequentially formed in a cylindrical shape with a small diameter.

3. The composite filter of claim 2,
wherein the connection tube comprises:
an outer wall formed in a tubular shape and having at least one through hole formed at a lower end to connect the second connection tube space and the second cover cap space; and
a guide wall disposed inside the outer wall to partition the first connection tube space and the second connection tube space,
wherein the upper end of the guide wall is coupled to the third partition wall so that the second water inlet space and the first connection tube space are connected, and
the upper end of the outer wall is coupled to the second partition wall so that the second water outlet space and the second connection tube space are connected.

4. The composite filter of claim 3,
wherein the connection tube further comprises:
a connection tube body formed between the lower end of the outer wall and the lower end of the guide wall to close the lower side of the second connection tube space so that the second connection tube space is partitioned from the first cover cap space and open the lower side of the first connection tube space so that the first connection tube space is connected to the first cover cap space, and
at least one protrusion protruding downward from the connection tube body so that the lower end of the lower filter structure is spaced apart from the cover cap.

5. The composite filter of claim 2,
wherein the upper filter is formed in a hollow shape so that the first housing body space is formed on the outside and the second housing body space is formed on the inside,
the upper filter structure comprises:
a first upper cap supporting the upper side of the upper filter; and
a first lower cap supporting the lower side of the upper filter, and
the connection tube is disposed through the upper filter, the first upper cap, and the first lower cap.

6. The composite filter of claim 5,
wherein the first upper cap further comprises a cylindrical guide member that extends upward to partition the first housing body space and the second housing body space and is coupled to the first partition wall, and
the connection tube is disposed through the inside of the guide member.

7. The composite filter of claim 1,
wherein the lower filter is formed in a hollow shape so that the first cover cap space is formed on the outside and the second cover cap space is formed on the inside,
the lower filter structure comprises:
a second upper cap supporting the upper side of the lower filter; and
a second lower cap supporting the lower side of the lower filter, and
the connection tube is disposed through the lower filter, the second upper cap, and the second lower cap so that the lower end of the connection tube is disposed in the second cover cap space.

8. The composite filter of claim 7, further comprising a hollow additional filter disposed in the second cover cap space.

9. The composite filter of claim 1,
further comprising an external filter with one side connected to the first water outlet port and the other side connected to the second water inlet port,
wherein the first water outlet port is connected to the second water inlet port through the external 'filter, and
the second raw water is the first purified water.

10. A composite filter, comprising:
a housing body in which a first inner space is formed;
a first filter structure disposed in the first inner space, having a first filter, and partitioning a first housing body space defined by the outer circumferential surface of the first filter and the inner circumferential surface of the housing body;
a connection tube extending in length to penetrate the first filter, having a first connection tube space and a second connection tube space formed therein extending in the longitudinal direction, and partitioning a second housing body space defined by the outer circumferential surface thereof and the inner circumferential surface of the first filter;
a housing head disposed on the upper side of the housing body, having a first water inlet space and a first water outlet space formed therein, and having a first water inlet port connected to the first water inlet space and a first water outlet port connected to the first water outlet space; and
a first flow path formed such that through which first raw water introduced into the first water inlet port passes through the first water inlet space, the first connection tube space, the first housing body space, the first filter, the second housing body space, the second connection tube space, and the first water outlet space, and then is discharged through the first water outlet port into first purified water.

11. The composite filter of claim 10,
wherein the housing head comprises:
a housing head body coupled to the upper end of the connection tube and having a second inner space therein;
a first partition wall partitioning the second inner space into a first water inlet space connected in fluid communication with the first connection tube space and a first water outlet space connected in fluid communication with the second connection tube space;
a hollow first connection member connecting the first connection tube space and the first water inlet space; and
a hollow second connection member connecting the second connection tube space and the first water outlet space.

12. The composite filter of claim 11,
wherein the connection tube comprises:
a tubular outer wall;
a guide wall partitioning the inside of the outer wall into the first connection tube space and the second connection tube space;
at least one first through hole formed in a first portion of the outer wall so that the first connection tube space and the first housing body space are connected; and
at least one second through hole formed in a second portion of the outer wall so that the second connection tube space and the second housing body space are connected.

13. The composite filter of claim 11,
wherein the connection tube comprises:
a tubular first guide tube with a first connection tube space formed therein;
at least one first through hole formed in a first portion of the first guide tube so that the first connection tube space and the first housing body space are connected;
a second guide tube with a second connection tube space formed therein and formed in a tubular shape, but disposed parallel to the first guide tube; and
at least one second through hole formed in a second portion of the second guide tube so that the second connection tube space and the second housing body space are connected.

14. The composite filter of claim 10,
wherein the first filter is formed in a hollow shape so that the first housing body space is formed on the outside and the second housing body space is formed on the inside,
the first filter structure comprises:
a first upper cap supporting the upper side of the first filter; and
a first lower cap supporting the lower side of the first filter, and
the connection tube is disposed through the first filter, the first upper cap, and the first lower cap.

15. The composite filter of claim 11,
further comprising a second filter structure disposed below the first filter structure in the first inner space, having a second filter, and partitioning a third housing body space defined by the outer circumferential surface of the second filter and the inner circumferential surface of the housing body,
wherein the connection tube further has a third connection tube space and a fourth connection tube space formed therein extending in the longitudinal direction, and partitioning a fourth housing body space defined by the outer circumferential surface thereof and the inner circumferential surface of the second filter; and
the housing head further has a second water inlet space in fluid communication with the third connection tube space and a second water outlet space in fluid communication with the fourth connection tube space formed in the second inner space, and further comprises a second water inlet port connected to the second water inlet space and a second water outlet port connected to the second water outlet space, and
the composite filter comprises: a second flow path formed such that through which second raw water introduced into the second water inlet port passes through the second water inlet space, the third connection tube space, the third housing body space, the second filter, the fourth housing body space, the fourth connection tube space, and the second water outlet space, and then is discharged through the second water outlet port into second purified water.

16. The composite filter of claim 15,
wherein the housing head further comprises:
a second partition wall partitioning the first water inlet space and the first water outlet space from the second water inlet space;
a third partition wall partitioning the first water outlet space and the second water inlet space from the second water outlet space;
a hollow third connection member connecting the third connection tube space and the second water inlet space; and
a hollow fourth connection member connecting the fourth connection tube space and the second water outlet space.

17. The composite filter of claim 16,
wherein the connection tube comprises:
a tubular outer wall;
a guide wall partitioning the inside of the outer wall into the first connection tube space, the second connection tube space, the third connection tube space, and the fourth connection tube space;
at least one first through hole formed in a first portion of the outer wall so that the first connection tube space and the first housing body space are connected;
at least one second through hole formed in a second portion of the outer wall so that the second connection tube space and the second housing body space are connected;
at least one third through hole formed in a third portion of the outer wall so that the third connection tube space and the third housing body space are connected; and
at least one fourth through hole formed in a fourth portion of the outer wall so that the fourth connection tube space and the fourth housing body space are connected.

18. The composite filter of claim 17,
wherein the first filter is formed in a hollow shape so that the first housing body space is formed on the outside and the second housing body space is formed on the inside,
the first filter structure comprises:
a first upper cap supporting the upper side of the first filter; and a first lower cap supporting the lower side of the first filter,
the connection tube is disposed through the first filter, the first upper cap, and the first lower cap,
the second filter is formed in a hollow shape so that the third housing body space is formed on the outside and the fourth housing body space is formed on the inside,
the second filter structure comprises:
a second upper cap supporting the upper side of the second filter; and a second lower cap supporting the lower side of the second filter, and
the connection tube is disposed through the second filter, the second upper cap, and the second lower cap.

19. The composite filter of claim 18,
wherein the first lower cap has a coupling groove formed on the lower surface thereof and recessed upward along the outer circumferential surface of the connection tube,
the second upper cap has a coupling protrusion formed on the upper surface thereof to protrude upward along the outer circumferential surface of the connection tube and to be inserted into and hermetically coupled to the coupling groove,
a connection space is formed inside the second upper cap and is connected to the first through hole to connect the first housing body space and the first connection tube space, and
the first flow path further passes through the connection space between the first housing body space and the first connection tube space.

20. A water purifier having a composite filter, comprising:
a composite filter according to any one of claims 1 to 19;
a valve unit regulating the flow of the first flow path and the second flow path; and
a control unit for controlling the operation of the valve unit.
